# EUROPEAN PATENT APPLICATION

(11) **EP 4 780 075 A1**
(43) Date of publication of application: **22.07.2026**
(21) Application number: 23951778.2
(22) Date of filing: 12.09.2023
(51) Int. Cl.: H04W 40/24

(54) **PATH ESTABLISHMENT METHODS, APPARATUSES, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); LI, Lisi, Beijing 100085 (CN)
(74) Representative: Stöckeler, Ferdinand
(86) International application number: PCT/CN2023/118401
(87) International publication number: WO 2025/054837

(57) **Abstract**

Provided in the present disclosure are path establishment methods, apparatuses, devices, and a storage medium. A method comprises: receiving first information sent by a second network element, so as to establish a user plane path between an access network device and a third network element by establishing or modifying a protocol data unit (PDU) session between a terminal and a data network where the third network element is located, the first information being used for establishing the user plane path, and the user plane path being used for sending and/or receiving first data related to a first service. Therefore, provided is a method for how to trigger a request for establishing a user plane path between a third network element and an access network device so as to successfully establish the user plane path between the third network element and the access network device, and for the third network element to subsequently acquire service data from the access network device on the basis of the user plane path, thereby improving the data transmission efficiency.

## Description

### TECHNICAL FIELD

This disclosure relates to the field of communication technology, and in particular, to methods and apparatuses for establishing a path, communication devices, a communication system, and a storage medium.

### BACKGROUND

In a communication system, a core network generally needs to obtain service data (such as network assistance data) from an access network device.

### SUMMARY

The disclosure provides methods and apparatuses for establishing a path, communication devices, a communication system, and a storage medium.

According to a first aspect of embodiments of the disclosure, a method for establishing a path executed by a first network element is provided. The method includes: receiving first information sent by a second network element, to establish a user plane path between an access network device and a third network element by establishing or modifying a protocol data unit (PDU) session between a terminal and a data network where the third network element is located, in which the first information is used in establishing the user plane path, and the user plane path is used for sending and/or receiving first data related to a first service.

In the above method, the first network element receives the first information sent by the second network element. The first information is used in establishing the user plane path between the access network device and the third network element. The user plane path is used for sending and/or receiving the first data related to the first service. The user plane path is established by establishing or modifying the PDU session between the terminal and the data network where the third network element is located. It may be seen that embodiments of the disclosure provide a method for how to trigger to request an establishment of a user plane path between the third network element and the access network device and to successfully establish the user plane path between the third network element and the access network device, to enable the third network element to subsequently obtain service data from the access network device based on the user plane path, thereby improving data transmission efficiency.

According to a second aspect of embodiments of the disclosure, a method for establishing a path performed by a terminal is provided. The method includes: obtaining fifth information used in establishing a user plane path between an access network device and a third network element, in which the user plane path is used for transferring first data related to a first service, and the user plane path is established by establishing or modifying a protocol data unit (PDU) session between the terminal and a data network where the third network element is located.

In the above method, the terminal may obtain the fifth information used in establishing the user plane path between the access network device and the third network element, in which the user plane path is used for transferring the first data related to the first service, and the user plane path is established by establishing or modifying the PDU session between the terminal and the data network where the third network element is located. It may be seen that embodiments of the disclosure provide a method for how to trigger to request an establishment of a user plane path between the third network element and the access network device, and how to successfully establish the user plane path between the third network element and the access network device, to enable the third network element to subsequently obtain service data from the access network device based on the user plane path, thereby improving data transmission efficiency.

According to a third aspect of embodiments of the disclosure, a method for establishing a path performed by a second network element is provided. The method includes: receiving eighth information sent by a third network element, and sending first information to a first network element, to establish a user plane path between an access network device and the third network element by establishing or modifying a protocol data unit (PDU) session between a terminal and a data network where the third network element is located, in which the eighth information and/or the first information are used in establishing the user plane path, and the user plane path is used for sending and/or receiving first data related to a first service.

In the above method, the second network element may receive the eighth information sent by the third network element, and send the first information to the first network element, in which the eighth information and/or the first information are used in establishing the user plane path between the access network device and the third network element, the user plane path is used for sending and/or receiving the first data related to the first service, to establish the user plane path by establishing or modifying the PDU session between the terminal and the data network where the third network element is located. It may be seen that embodiments of the disclosure provide a method for how to trigger to request an establishment of a user plane path between the third network element and the access network device, and how to successfully establish the user plane path between the third network element and the access network device, to enable the third network element to subsequently obtain service data from the access network device based on the user plane path, thereby improving data transmission efficiency.

According to a fourth aspect of embodiments of the disclosure, a method for establishing a path performed by a third network element is provided. The method includes: determining to establish a user plane path between the third network element and an access network device; sending eighth information to a second network element, in which the eighth information is used in establishing the user plane path; and receiving, via the user plane path, first data sent by the access network device, in which the first data is related to a first service.

In the above method, the third network element may request service data from the access network device either via a control plane path or via the established user plane path, which broadens application boundaries and improves communication flexibility.

According to a fifth aspect of embodiments of the disclosure, a method for establishing a path performed by an access network device is provided. The method includes:
sending, via a user plane path between the access network device and a third network element, first data to the third network element, in which the first data is related to a first service, and the user plane path is established by establishing or modifying a protocol data unit (PDU) session between a terminal and a data network where the third network element is located.

In the above embodiment, the first data is sent to the third network element via the user plane path between the access network device and the third network element, which enables transmission of the first data over the user plane.

According to a sixth aspect of embodiments of the disclosure, a first network element is provided. The first network element includes a transceiver module configured to receive first information sent by a second network element, to establish a user plane path between an access network device and a third network element by establishing or modifying a protocol data unit (PDU) session between a terminal and a data network where the third network element is located, in which the first information is used in establishing the user plane path, and the user plane path is used for sending and/or receiving first data related to a first service.

According to a seventh aspect of embodiments of the disclosure, a terminal is provided. The terminal includes a transceiver module configured to obtain fifth information used in establishing a user plane path between an access network device and a third network element, in which the user plane path is used for transmitting/transferring first data related to a first service, and the user plane path is established by establishing or modifying a protocol data unit (PDU) session between the terminal and a data network where the third network element is located.

According to an eighth aspect of embodiments of the disclosure, a second network element is provided. The second network element includes a transceiver module configured to receive eighth information sent by a third network element, and send first information to a first network element, to establish a user plane path between an access network device and the third network element by establishing or modifying a protocol data unit (PDU) session between a terminal and a data network where the third network element is located, in which the eighth information and/or the first information are used in establishing the user plane path, and the user plane path is used for sending and/or receiving first data related to a first service.

According to a ninth aspect of embodiments of the disclosure, a third network element is provided. The third network element includes a processing module configured to determine to establish a user plane path between the third network element and an access network device; a transceiver module configured to send eighth information to a second network element, in which the eighth information is used in establishing the user plane path; and the transceiver module is further configured to receive, via the user plane path, first data sent by the access network device, in which the first data is related to a first service.

According to a tenth aspect of embodiments of the disclosure, an access network device is provided. The access network device includes a transceiver module configured to send, via a user plane path between the access network device and a third network element, first data to the third network element, in which the first data is related to a first service, and the user plane path is established by establishing or modifying a protocol data unit (PDU) session between a terminal and a data network where the third network element is located.

According to an eleventh aspect of embodiments of the disclosure, a communication device is provided. The communication device includes: one or more processors. The one or more processors are configured to invoke instructions to cause a communication device to perform methods for establishing a path according to any one of the first to fifth aspects.

According to a twelfth aspect of embodiments of the disclosure, a communication system is provided. The communication device includes a first network element, a second network element, a third network element, an access network device, and a terminal. The first network element is configured to implement the method for establishing a path according to the first aspect, the terminal is configured to implement the method for establishing a path according to the second aspect, the second network element is configured to implement the method for establishing a path according to the third aspect, the third network element is configured to implement the method for establishing a path according to the fourth aspect, and the access network device is configured to implement the method for establishing a path according to the fifth aspect.

According to a thirteenth aspect of embodiments of the disclosure, a storage medium is provided. The storage medium has instructions stored thereon. When the instructions are executed on a communication device, the communication device is caused to perform the methods for establishing a path according to any one of the first to fifth aspects.

### BRIEF DESCRIPTION OF THE DRAWINGS

The above and/or additional aspects and advantages of the disclosure will become apparent and easily understood from the description of embodiments in conjunction with the following drawings.
FIG. 1A is a schematic diagram illustrating an architecture of some communication systems according to an embodiment of the disclosure.
FIG. 1B is a flowchart illustrating a method of initiating a user plane path establishment by a core network element according to an embodiment of the disclosure.
FIG. 1C is a flowchart illustrating a method of obtaining service data from an access network device by a core network element according to an embodiment of the disclosure.
FIGS. 2A and 2B are schematic diagrams illustrating an interaction of methods for establishing a path according to some embodiments of the disclosure.
FIG. 3A is a schematic flowchart illustrating a method for establishing a path according to yet another embodiment of the disclosure.
FIG. 4A is a schematic flowchart illustrating a method for establishing a path according to yet another embodiment of the disclosure.
FIG. 5A is a schematic flowchart illustrating a method for establishing a path according to yet another embodiment of the disclosure.
FIG. 6A is a schematic flowchart illustrating a method for establishing a path according to yet another embodiment of the disclosure.
FIG. 7A is a schematic flowchart illustrating a method for establishing a path according to yet another embodiment of the disclosure.
FIGS. 8A and 8B are schematic diagrams illustrating an interaction of a method for establishing a path according to further embodiments of the disclosure.
FIGS. 9A and 9B are schematic diagrams illustrating an interaction of a method for establishing a path according to further embodiments of the disclosure.
FIG. 10A is a schematic diagram illustrating a structure of a first network element according to an embodiment of the disclosure.
FIG. 10B is a schematic diagram illustrating a structure of a terminal according to an embodiment of the disclosure.
FIG. 10C is a schematic diagram illustrating a structure of a second network element according to an embodiment of the disclosure.
FIG. 10D is a schematic diagram illustrating a structure of a third network element according to an embodiment of the disclosure.
FIG. 10E is a schematic diagram illustrating a structure of an access network device according to an embodiment of the disclosure.
FIG. 11A is a schematic diagram illustrating a structure of a communication device according to an embodiment of the disclosure.
FIG. 11B is a schematic diagram illustrating a structure of a chip according to an embodiment of the disclosure.

### DETAILED DESCRIPTION

Embodiments of the disclosure provide methods and apparatuses for establishing a path, communication devices, a communication system, and a storage medium.

In a first aspect, embodiments of the disclosure provide a method for establishing a path performed by a first network element. The device includes receiving first information sent by a second network element, to establish a user plane path between an access network device and a third network element by establishing or modifying a protocol data unit (PDU) session between a terminal and a data network where the third network element is located, in which the first information is used in establishing the user plane path, and the user plane path is used for sending and/or receiving first data related to a first service.

In the above embodiment, the first network element receives the first information sent by the second network element, the first information is used in establishing the user plane path between the access network device and the third network element, the user plane path is used for sending and/or receiving the first data related to the first service, to establish the user plane path by establishing or modifying the PDU session between the terminal and the data network where the third network element is located. It may be seen that embodiments of the disclosure provide a method for how to trigger to request an establishment of a user plane path between the third network element and the access network device, and how to successfully establish the user plane path between the third network element and the access network device, to enable the third network element to subsequently obtain service data from the access network device based on the user plane path, thereby improving data transmission efficiency.

In combination with some embodiments of the first aspect, in some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device that the user plane path needs to connect to.

In combination with some embodiments of the first aspect, in some embodiments, the access network device provides a service to the terminal, or the access network device provides no service to the terminal.

In the above embodiment, the access network device that the user plane path needs to connect to may a service to the terminal or may not provide any service to the terminal. The access network device may obtain service data of the terminal it serves and may obtain other data, thereby providing it to the third network element through the established user plane path, broadening application scenarios.

In combination with some embodiments of the first aspect, in some embodiments, an establishment mode of establishing the user plane path by establishing or modifying the PDU session between the terminal and the data network where the third network element is located is determined by any one of the first network element, the second network element, and the third network element,

In which when the establishment mode is determined by the second network element or the third network element, the indication information is also used for indicating establishing the user plane path by establishing or modifying the PDU session between the terminal and the data network where the third network element is located.

In the above embodiment, the establishment mode of the user plane path between the third network element and the access network device may be determined by different entities, i.e., may be initiated by the first network element, by the second network element, or by the third network element, thereby broadening application scenarios and improving the establishment flexibility of the user plane path.

In combination with some embodiments of the first aspect, in some embodiments, the first information is carried by a first message, where the first message is used for requesting establishment or modification of a PDU session context.

In the above embodiment, the first information may be carried by existing signaling used for requesting establishment or modification of the PDU session context, thereby saving signaling overhead, or may be carried by dedicated signaling used for requesting establishment or modification of a PDU session context. The carrying mode of the first information may be determined based on an application scenario, thereby improving flexibility.

In combination with some embodiments of the first aspect, in some embodiments, the method further includes: determining one or more fourth network elements based on the first information.

In the above embodiment, the first network element may determine one or more fourth network elements based on the first information. This solution considers not only the case where the access network device for collecting service data may be the same as the access network device for providing a service to the terminal, but also the case where the access network device for collecting the service data may be different from the access network device for providing a service to the terminal, thereby broadening application scenarios.

In combination with some embodiments of the first aspect, in some embodiments, the method further includes: establishing or modifying one or more N4 sessions with the one or more fourth network elements.

In the above embodiment, the first network element may establish or modify one or more N4 sessions with the determined one or more fourth network elements, thereby establishing the PDU session, to realize the establishment of the user plane path between the access network device and the third network element.

In combination with some embodiments of the first aspect, in some embodiments, the method further includes: sending second information to the access network device via the second network element; and receiving third information sent by the access network device via the second network element.

In combination with some embodiments of the first aspect, in some embodiments, the second information includes at least one of: core network tunnel information of the one or more fourth network elements selected by the first network element; a requested QoS flow; a requested QoS flow related QoS parameter; or user plane information of the third network element.

In combination with some embodiments of the first aspect, in some embodiments, the third information includes at least one of: capability information of the access network device; access network tunnel information of the access network device; access network tunnel information for a terminal related QoS flow; or access network tunnel information for a terminal unrelated QoS flow.

In combination with some embodiments of the first aspect, in some embodiments, the method further includes: sending fourth information to the one or more fourth network elements.

In combination with some embodiments of the first aspect, in some embodiments, the fourth information includes at least one of: access network tunnel information; or a forwarding rule used for indicating a rule for a fourth network element to forward the first data.

In combination with some embodiments of the first aspect, in some embodiments, the forwarding rule include at least one of: a first rule for indicating forwarding the first data associated with a QoS flow identity (QFI); or a second rule for indicating forwarding the first data based on a destination address of the first data.

In combination with some embodiments of the first aspect, in some embodiments, the forwarding rule is a first rule, and the first rule indicates forwarding the first data associated with the QFI. The access network device is not aware of the user plane information of the third network element and/or the first data determined by the access network device includes no destination address of the first data encapsulated using the user plane information of the third network element.

In combination with some embodiments of the first aspect, in some embodiments, the forwarding rule is a second rule for indicating forwarding the first data based on the destination address of the first data; where the access network device is aware of the user plane information of the third network element, and the first data determined by the access network device includes the destination address of the first data encapsulated using the user plane information of the third network element.

In the above embodiment, the first network element may send the forwarding rule to the fourth network element, to enable the fourth network element to successfully forward a service data packet on the user plane path based on the forwarding rule, thereby ensuring the stability and accuracy of data transmission on the user plane path.

In a second aspect, embodiments of the disclosure provide a method for establishing a path performed by a terminal. The method includes: obtaining fifth information used in establishing a user plane path between an access network device and a third network element, where the user plane path is used for transmitting/transferring first data related to a first service, and the user plane path is established by establishing or modifying a protocol data unit (PDU) session between the terminal and a data network where the third network element is located.

In the above embodiment, the terminal may obtain the fifth information used in establishing the user plane path between the access network device and the third network element, where the user plane path is used for transmitting/transferring the first data related to the first service, and the user plane path is established by establishing or modifying the PDU session between the terminal and the data network where the third network element is located. It may be seen that embodiments of the present disclosure provide a method for how to trigger a request establishment of a user plane path between the third network element and the access network device, and how to successfully establish the user plane path between the third network element and the access network device, to enable the third network element to subsequently obtain service data from the access network device based on the user plane path, thereby improving data transmission efficiency.

In combination with some embodiments of the second aspect, in some embodiments, the fifth information includes at least one of: indication information used for indicating establishing the user plane path; user plane information of the third network element; a data network name (DNN) of the data network where the third network element is located; or single network slice selection assistance information (S-NSSAI) of the data network where the third network element is located.

In combination with some embodiments of the second aspect, in some embodiments, the method further includes: determining an absence of the PDU session, and establishing the PDU session based on the fifth information, where the data network where the third network element is located and that the PDU session connects to is identified by the DNN and/or the S-NSSAI.

In combination with some embodiments of the second aspect, in some embodiments, the method further includes: determining a presence of the PDU session and/or that the user plane path between the access network device and the third network element in the PDU session is unavailable, and modifying the PDU session based on the fifth information to add to the PDU session the user plane path between the access network device and the third network element, where the data network where the third network element is located and that the PDU session connects to is identified by the DNN and/or the S-NSSAI.

In the above embodiment, after receiving the fifth information, the terminal may determine based on the fifth information whether establishment of a PDU session is required. The PDU session connects the terminal and the data network where the third network element is located, and the data network where the third network element is located is identified by DNN and/or S-NSSAI. In a case where there is the PDU session, there is no need to establish the PDU session again, and only the user plane path between the access network device and the third network element is required to be added to this PDU session. In a case where there is no PDU session, the establishment of the PDU session is required. When established, this PDU session includes two user plane paths, one being the user plane path between the terminal and the third network element, and the other being the user plane path between the access network device and the third network element. With the terminal's prior judgment, it may be determined whether to execute the PDU session establishment procedure or the PDU session modification procedure, thereby saving communication procedures and improving communication efficiency.

In combination with some embodiments of the second aspect, in some embodiments, the DNN and/or the S-NSSAI are obtained from the second network element, obtained from the third network element, or obtained locally from the terminal.

In the above embodiment, the network may send the DNN and/or the S-NSSAI to the terminal in real time, or the DNN and/or the S-NSSAI may be configured by the network to the terminal in advance and stored by the terminal. Thus, the terminal may determine whether to execute the PDU session establishment procedure or the PDU session modification procedure based on the DNN and/or the S-NSSAI obtained from the network, or the terminal may determine whether to execute the PDU session establishment procedure or the PDU session modification procedure based on the locally stored DNN and/or S-NSSAI, thereby broadening application boundaries and improving communication flexibility.

In combination with some embodiments of the second aspect, in some embodiments, the method further includes: sending sixth information to the second network element, where the sixth information is used in establishing or modifying the PDU session.

In combination with some embodiments of the second aspect, in some embodiments, the sixth information includes at least one of: indication information used for indicating establishing the user plane path; user plane information of the third network element; a data network name (DNN) of the data network where the third network element is located; single network slice selection assistance information (S-NSSAI) of the data network where the third network element is located; location information of the terminal; or information of the access network device that the user plane path needs to connect to.

In a third aspect, embodiments of the disclosure provide a method for establishing a path performed by a second network element. The method includes:
receiving eighth information sent by a third network element, sending first information to a first network element, to establish a user plane path between an access network device and the third network element by establishing or modifying a protocol data unit (PDU) session between a terminal and a data network where the third network element is located, where the eighth information and/or the first information are used in establishing the user plane path, and the user plane path is used for sending and/or receiving first data related to a first service.

In the above embodiment, the second network element may receive the eighth information sent by the third network element, and send the first information to the first network element. The eighth information and/or the first information are used in establishing the user plane path between the access network device and the third network element, and the user plane path is used for sending and/or receiving the first data related to the first service, to establish the user plane path by establishing or modifying the PDU session between the terminal and the data network where the third network element is located. It may be seen that embodiments of the disclosure provide a method for how to trigger to request establishment of a user plane path between the third network element and the access network device, and how to successfully establish the user plane path between the third network element and the access network device, to enable the third network element to subsequently obtain service data from the access network device based on the user plane path, thereby improving data transmission efficiency.

In combination with some embodiments of the third aspect, in some embodiments, the eighth information includes at least one of: indication information used for indicating establishing the user plane path; user plane information of the third network element; information of the access network device; a data network name (DNN) of the data network where the third network element is located; or single network slice selection assistance information (S-NSSAI) of the data network where the third network element is located.

In combination with some embodiments of the third aspect, in some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device that the user plane path needs to connect to.

In combination with some embodiments of the third aspect, in some embodiments, the access network device provides a service to the terminal, or the access network device provides no service to the terminal.

In the above embodiment, the access network device that the user plane path needs to connect to may provide a service to the terminal or may not provide any service to the terminal. The access network device may obtain both service data of the terminal it serves and other data, and provide it to the third network element through the established user plane path, thereby broadening application scenarios.

In combination with some embodiments of the third aspect, in some embodiments, an establishment mode of establishing the user plane path by establishing or modifying the PDU session between the terminal and the data network where the third network element is located is determined by any one of the first network element, the second network element, or the third network element, where when the establishment mode is determined by the second network element or the third network element, the indication information is also used for indicating establishing the user plane path by establishing or modifying the PDU session between the terminal and the data network where the third network element is located.

In the above embodiment, the establishment mode of the user plane path between the third network element and the access network device may be determined by different entities, i.e., may be initiated by the first network element, by the second network element, or by the third network element, thereby broadening application scenarios and improving the establishment flexibility of the user plane path.

In combination with some embodiments of the third aspect, in some embodiments, the first information is carried by a first message, and the first message is used for requesting establishment or modification of a PDU session context.

In the above embodiment, the first information may be carried by existing signaling used for requesting the establishment or the modification of the PDU session context, thereby saving signaling overhead, or may be carried by dedicated signaling used for requesting the establishment or the modification of the PDU session context. The carrying mode of the first information may be determined based on the application scenario, thereby improving flexibility.

In combination with some embodiments of the third aspect, in some embodiments, the method further includes: sending fifth information to the terminal, where the fifth information includes at least one of: indication information used for indicating establishing the user plane path; user plane information of the third network element; a data network name (DNN) of the data network where the third network element is located; or single network slice selection assistance information (S-NSSAI) of the data network where the third network element is located.

In combination with some embodiments of the third aspect, in some embodiments, in a first case, the fifth information is used in establishing the PDU session, where the first case is that the terminal determines the absence of the PDU session; or in a second case, the fifth information is used in modifying the PDU session to add to the PDU session the user plane path between the access network device and the data network where the third network element is located, where the second case is that the terminal determines the presence of the PDU session and/or that the user plane path between the access network device and the third network element in the PDU session is unavailable, and the data network where the third network element is located and to which the PDU session connects is identified by the DNN and/or the S-NSSAI.

In the above embodiment, after receiving the fifth information, the terminal may determine whether establishment of a PDU session is required based on the fifth information. The PDU session connects the terminal and the data network where the third network element is located. The data network where the third network element is located is identified by the DNN and/or the S-NSSAI. In a case where there is the PDU session, there is no need to establish the PDU session again, and only the user plane path between the access network device and the third network element needs to be added to this PDU session. In a case where there is no PDU session, establishment of the PDU session is required. When established, this PDU session includes two user plane paths, one being the user plane path between the terminal and the third network element, and the other being the user plane path between the access network device and the third network element. With the terminal's prior judgment, it may be determined whether to execute the PDU session establishment procedure or the PDU session modification procedure, thereby saving communication procedures and improving communication efficiency.

In combination with some embodiments of the third aspect, in some embodiments, the method further includes: receiving second information sent by the first network element.

In combination with some embodiments of the third aspect, in some embodiments, the second information includes at least one of: core network tunnel information of one or more fourth network elements selected by the first network element; a requested QoS flow; a requested QoS flow related QoS parameter; or user plane information of the third network element.

In combination with some embodiments of the third aspect, in some embodiments, the method further includes: sending ninth information to the access network device, where the ninth information includes at least one of: core network tunnel information of the one or more fourth network elements selected by the first network element; a requested QoS flow; a requested QoS flow related QoS parameter; or user plane information of the third network element.

In combination with some embodiments of the third aspect, in some embodiments, the method further includes: receiving tenth information sent by the access network device, where the tenth information includes at least one of: capability information of the access network device; access network tunnel information of the access network device; access network tunnel information for a terminal related QoS flow; or access network tunnel information for a terminal unrelated QoS flow.

In combination with some embodiments of the third aspect, in some embodiments, the method further includes: sending third information to the first network element, where the third information includes at least one of: capability information of the access network device; access network tunnel information of the access network device; access network tunnel information for a terminal related QoS flow; or access network tunnel information for a terminal unrelated QoS flow.

In the above embodiment, the second network element may implement an information forwarding function, where ninth information may be partially the same as, completely the same as, or completely different from the second information, and tenth information may be partially the same as, completely the same as, or completely different from the third information, thereby realizing the establishment or the modification of the PDU session, to establish the user plane path between the access network device and the third network element by establishing or modifying the PDU session between the terminal and the third network element.

In a fourth aspect, embodiments of the disclosure provide a method for establishing a path performed by a third network element. The method includes determining to establish a user plane path between the third network element and an access network device; sending eighth information to a second network element, where the eighth information is used in establishing the user plane path; and receiving, via the user plane path, first data sent by the access network device, where the first data is related to a first service.

In combination with some embodiments of the fourth aspect, in some embodiments, the eighth information includes at least one of: indication information used for indicating establishing the user plane path; user plane information of the third network element; information of the access network device; a data network name (DNN) of the data network where the third network element is located; or single network slice selection assistance information (S-NSSAI) of the data network where the third network element is located.

In combination with some embodiments of the fourth aspect, in some embodiments, the method further includes: sending eleventh information to the access network device via the user plane path or via a control plane path between the access network device and the third network element, where the eleventh information is used for requesting the first data.

In combination with some embodiments of the fourth aspect, in some embodiments, the eleventh information includes at least one of: first data request information; indication information used for indicating establishing the user plane path; user plane information of the third network element; or identifier information of the user plane path.

In the above embodiment, the third network element may request the service data from the access network device either via the control plane path or via the established user plane path, thereby broadening application boundaries and improving communication flexibility.

In a fifth aspect, embodiments of the disclosure provide a method for establishing a path performed by an access network device. The method includes: sending, via a user plane path between the access network device and a third network element, first data to the third network element, where the first data is related to a first service, and the user plane path is established by establishing or modifying a protocol data unit (PDU) session between a terminal and a data network where the third network element is located.

In combination with some embodiments of the fifth aspect, in some embodiments, the method further includes: receiving ninth information sent by a second network element, where the ninth information includes at least one of: core network tunnel information of one or more fourth network elements selected by a first network element; a requested QoS flow; a requested QoS flow related QoS parameter; or user plane information of the third network element.

In combination with some embodiments of the fifth aspect, in some embodiments, the method further includes: establishing a QoS flow for the user plane path.

In the above embodiment, by establishing the QoS flow for the user plane path between the access network device and the third network element, the establishment or modification of the PDU session is realized, such that the user plane path between the access network device and the third network element is established by establishing or modifying the PDU session between the terminal and the third network element.

In combination with some embodiments of the fifth aspect, in some embodiments, the method further includes: sending tenth information to the second network element, where the tenth information includes at least one of: capability information of the access network device; access network tunnel information of the access network device; access network tunnel information for a terminal related QoS flow; access network tunnel information for a terminal unrelated QoS flow.

In combination with some embodiments of the fifth aspect, in some embodiments, the method further includes: receiving eleventh information sent by the third network element via the user plane path or via a control plane path between the access network device and the third network element, where the eleventh information is used for requesting the first data.

In combination with some embodiments of the fifth aspect, in some embodiments, the eleventh information includes at least one of: first data request information; indication information used for indicating establishing the user plane path; user plane information of the third network element; or identifier information of the user plane path.

In the above embodiment, the third network element may request service data from the access network device either via the control plane path or via the established user plane path, thereby broadening application boundaries and improving communication flexibility.

In combination with some embodiments of the fifth aspect, in some embodiments, the method further includes: determining service data of the first service, and packaging the service data of the first service into a service data packet based on the capability information of the access network device, as the first data; where the service data packet includes a destination address of the service data packet encapsulated using the user plane information of the third network element, or the service data packet includes no destination address of the service data packet encapsulated using the user plane information of the third network element.

In the above embodiment, the access network device may determine the first data, which is related to the first service. The access network device may determine the service data it generates itself, collect service data generated by the terminal it serves, and also collect and package service data collected by other access network devices or other devices to provide it to the third network element through the established user plane path. The access network device serves as the source of data provision but not necessarily the source of data generation, thereby broadening application boundaries.

In a sixth aspect, embodiments of the disclosure provide a first network element. The first network element includes a transceiver module configured to receive first information sent by a second network element, to establish a user plane path between an access network device and a third network element by establishing or modifying a protocol data unit (PDU) session between a terminal and a data network where the third network element is located, where the first information is used in establishing the user plane path, and the user plane path is used for sending and/or receiving first data related to a first service.

In a seventh aspect, embodiments of the disclosure provide a terminal. The terminal includes a transceiver module configured to obtain fifth information, where the fifth information is used in establishing a user plane path between an access network device and a third network element, the user plane path is used for transmitting/transferring first data related to a first service, and the user plane path is established by establishing or modifying a protocol data unit (PDU) session between the terminal and a data network where the third network element is located.

In an eighth aspect, embodiments of the disclosure provide a second network element. The second network element includes a transceiver module configured to receive eighth information sent by a third network element, and send first information to a first network element to establish a user plane path between an access network device and the third network element by establishing or modifying a protocol data unit (PDU) session between a terminal and a data network where the third network element is located, where the eighth information and/or the first information are used in establishing the user plane path, and the user plane path is used for sending and/or receiving first data related to a first service.

In a ninth aspect, embodiments of the disclosure provide a third network element. The third network element includes a processing module configured to determine to establish a user plane path between the third network element and an access network device; and a transceiver module configured to send eighth information to a second network element, where the eighth information is used in establishing the user plane path; the transceiver module is further configured to receive, via the user plane path, first data sent by the access network device, and the first data is related to a first service.

In a tenth aspect, embodiments of the disclosure provide an access network device. The access network device includes a transceiver module configured to send, via a user plane path between the access network device and a third network element, first data to the third network element, where the first data is related to a first service, and the user plane path is established by establishing or modifying a protocol data unit (PDU) session between a terminal and a data network where the third network element is located.

In an eleventh aspect, embodiments of the disclosure provide a communication device. The communication device includes: one or more processors; and one or more memories for storing instructions; where the one or more processors are configured to invoke the instructions to cause the communication device to perform the methods according to the first aspect, the second aspect, the third aspect, the fourth aspect, and implementations of the first aspect, implementations of the second aspect, implementations of the third aspect, and implementations of the fourth aspect.

In a twelfth aspect, embodiments of the disclosure provide a communication system. The communication system includes a first network element, a second network element, a third network element, an access network device, and a terminal. The first network element is configured to perform the method according to the first aspect and implementations of the first aspect, the terminal is configured to perform the method according to the second aspect and implementations of the second aspect, the second network element is configured to perform the method according to the third aspect and implementations of the third aspect, the third network element is configured to perform the method according to the fourth aspect and implementations of the fourth aspect, and the access network device is configured to perform the method according to the fifth aspect and implementations of the fifth aspect.

In a thirteenth aspect, embodiments of the disclosure provide a storage medium. The storage medium has instructions thereon. When the instructions are executed on a communication device, the communication device is caused to perform the method according to the first aspect, the second aspect, the third aspect, the fourth aspect, the fifth aspect, implementations of the first aspect, implementations of the second aspect, implementations of the third aspect, implementations of the fourth aspect, and implementations of the fifth aspect.

In a fourteenth aspect, embodiments of the disclosure provide a method for establishing a path performed in a communication system. The communication system includes a first network element, a second network element, a third network element, an access network device, and a terminal. The method includes at least one of:
the third network element determines to establish a user plane path between the third network element and the access network device, where the user plane path is used for transmitting/transferring first data related to a first service, and the user plane path is established through a protocol data unit (PDU) session between the terminal and a data network where the third network element is located;
the third network element sends eighth information to the second network element, where the eighth information is used in establishing the user plane path;
the terminal obtains fifth information used in establishing the user plane path;
the second network element sends first information to the first network element, where the first information is used in establishing the user plane path; or
the access network device sends first data to the third network element via the user plane path, where the first data is related to the first service.

It may be understood that the above-mentioned terminal, network device, communication device, communication system, and storage medium are all used to execute the methods according to embodiments of the disclosure. Therefore, for beneficial effects they may achieve, reference may be made to the beneficial effects in the corresponding methods, which are not repeated here.

Embodiments of the disclosure provide methods and apparatuses for establishing a path, communication devices, a communication system, and a storage medium. In some embodiments, terms such as "method for establishing a path", "information processing method", "information sending method" and "information receiving method" may be used interchangeably, terms such as "communication apparatus", "information processing apparatus", "information sending apparatus" and "information receiving apparatus" may be used interchangeably, and terms such as "information processing system", "communication system", "information sending system" and "information receiving system" may be used interchangeably.

Embodiments of the disclosure are not exhaustive, but merely illustrate some embodiments, and are not intended to limit the scope of protection of the disclosure. Where there is no conflict, each step in a certain embodiment may be implemented as an independent embodiment, and the steps may be combined arbitrarily. For example, a solution after removing some steps in a certain embodiment may also be implemented as an independent embodiment, and the order of steps in a certain embodiment may be arbitrarily exchanged. In addition, implementations in a certain embodiment may be combined arbitrarily. Furthermore, various embodiments may be combined arbitrarily. For example, some or all steps of different embodiments may be combined arbitrarily, and a certain embodiment may be combined arbitrarily with implementations of other embodiments.

In various embodiments of the disclosure, unless otherwise specified or logically conflicting, the terms and/or descriptions between different embodiments are consistent and may be referenced to each other, and technical features in different embodiments may be combined to form new embodiments according to their inherent logical relationships.

The terms used in embodiments of the disclosure are only for the purpose of describing specific embodiments and are not intended as limitations on the disclosure.

In embodiments of the disclosure, unless otherwise stated, elements expressed in the singular, such as "one", "a", "an", "the", "above", "said", "aforementioned", "this", may mean "one and only one", or may mean "one or more", "at least one". For example, when using articles such as "a", "an", "the" in translation (e.g., in English), the noun following the article may be understood as singular or plural.

In embodiments of the disclosure, the term "multiple" means two or more.

In some embodiments, terms such as "at least one of", "one or more", "a plurality of" and "multiple" may be used interchangeably.

Terms such as "at least one of A, B, C..." and "A and/or B and/or C..." in embodiments of the disclosure include cases where any one of A, B, C... exists alone, include cases where any multiple of A, B, C... are combined arbitrarily, and also include cases where each exists alone. For example, "at least one of A, B or C" includes cases of only A, only B, only C, combination of A and B, combination of A and C, combination of B and C, and combination of A, B, and C. For example, "A and/or B" includes cases of only A, only B, and combination of A and B.

In some embodiments, terms such as "in one case, performing A, and in another case, performing B" and "responsive to one case, performing A, and responsive to another case, performing B" may include the following technical solutions depending on actual situations: executing A irrespective of B, i.e., performing A in some embodiments; executing B irrespective of A, i.e., performing B in some embodiments; selectively executing A or B, i.e., selecting one from A and B to perform in some embodiments; executing both A and B, i.e., performing \A and B in some embodiments. The same applies when there are more branches such as A, B, C, etc.

Prefix words such as "first" and "second" in embodiments of the disclosure are only used to distinguish different described objects, and do not constitute limitations on the position, order, priority, quantity, or content of the described objects. For the statements about the described objects, reference may be made to the description in the claims or the context of the embodiments, and should not impose additional restrictions due to the use of prefix words. For example, if the described object is "field", the ordinal numbers before "field" in "first field" and "second field" do not limit the position or order between "fields", and "first" and "second" do not limit whether the "fields" they define are in the same message, nor do they limit the order of the "first field" and the "second field". As another example, if the described object is "level", the ordinal numbers before "level" in "first level" and "second level" do not limit the priority between "levels". As another example, the quantity of described objects is not limited by the ordinal numbers and may be one or more. Taking "first device" as an example, the number of "devices" may be one or more. Furthermore, the objects defined by different prefix words may be the same or different. For example, if the described object is "device", the "first device" and the "second device" may be the same device or different devices, and their types may be the same or different. As another example, if the described object is "information", the "first information" and the "second information" may be the same information or different information, and their content may be the same or different.

In some embodiments, "including A", "comprising A", "used for indicating A", "carrying A" may be interpreted as directly carrying A or as indirectly indicating A.

In some embodiments, terms such as "in response to...", "in response to determining...", "in a case where...", "when...", "if...", may be used interchangeably.

In some embodiments, terms such as "greater than", "greater than or equal to", "not less than", "more than", "more than or equal to", "not fewer than", "higher than", "higher than or equal to", "not lower than" and "above" may be used interchangeably, and terms such as "less than", "less than or equal to", "not greater than", "fewer than", "fewer than or equal to", "not more than", "lower than", "lower than or equal to", "not higher than" and "below" may be used interchangeably.

In some embodiments, an apparatus, etc., may be interpreted as physical or virtual, and its name is not limited to the names recorded in embodiments. Terms such as "apparatus", "equipment", "device", "circuit", "network element", "node", "function", "unit", "section", "system", "network", "chip", "chip system", "entity" and "subject" may be used interchangeably.

In some embodiments, "network" may be interpreted as a device included in the network (e.g., access network devices, core network devices, etc.).

In some embodiments, terms such as "access network device (AN device)", "radio access network device (RAN device)", "base station (BS)", "radio base station", "fixed station", "node", "access point (AP)", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier" and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" may be interchanged.

In some embodiments, an access network device, core network device, or network device may be replaced by a terminal. For example, embodiments of the disclosure may also be applied to a structure where communication between an access network device, core network device, or network device and a terminal is replaced by communication between multiple terminals (e.g., also referred to as device-to-device (D2D), vehicle-to-everything (V2X), etc.). In this case, the terminal may also be configured to have all or part of the functions of the access network device. In addition, terms such as "uplink" and "downlink" may be replaced by terms corresponding to communication between terminals (e.g., "sidelink"). For example, uplink channels, downlink channels, etc., may be replaced by sidelink channels, and uplink, downlink, etc., may be replaced by sidelink.

In some embodiments, a terminal may be replaced by an access network device, core network device, or network device. In this case, the access network device, core network device, or network device may be configured to have all or part of the functions of the terminal.

In some embodiments, obtaining data, information, etc., may comply with the laws and regulations of the country where it is located.

In some embodiments, data, information, etc., may be obtained after obtaining user consent.

In addition, each element, each row, or each column in a table of embodiments of the disclosure may be implemented as an independent embodiment, and any combination of elements, rows, or columns may also be implemented as an independent embodiment.

Correspondences shown in the table in the disclosure may be configured or predefined. The values of the information in each table are only examples and may be configured to other values, which are not limited by the disclosure. When configuring the correspondences between information and parameters, it is not necessary to configure all the correspondences shown in the tables. For example, in the tables of the disclosure, the correspondences shown in some rows may not be configured. As another example, appropriate modifications and adjustments may be made based on the above tables, such as splitting, merging, etc. The names of the parameters shown in the titles of the above tables may also adopt other names understandable by the communication device, and the values or representation modes of the parameters may also adopt other values or representation modes understandable by the communication device. When implementing the above tables, other data structures may also be used, such as arrays, queues, containers, stacks, linear lists, pointers, linked lists, trees, graphs, structures, classes, heaps, hash tables, etc.

"Predefined" in the disclosure may be understood as "defined", "defined in advance", "stored", "prestored", "prenegotiated", "preconfigured", "fixed", or "prefabricated".

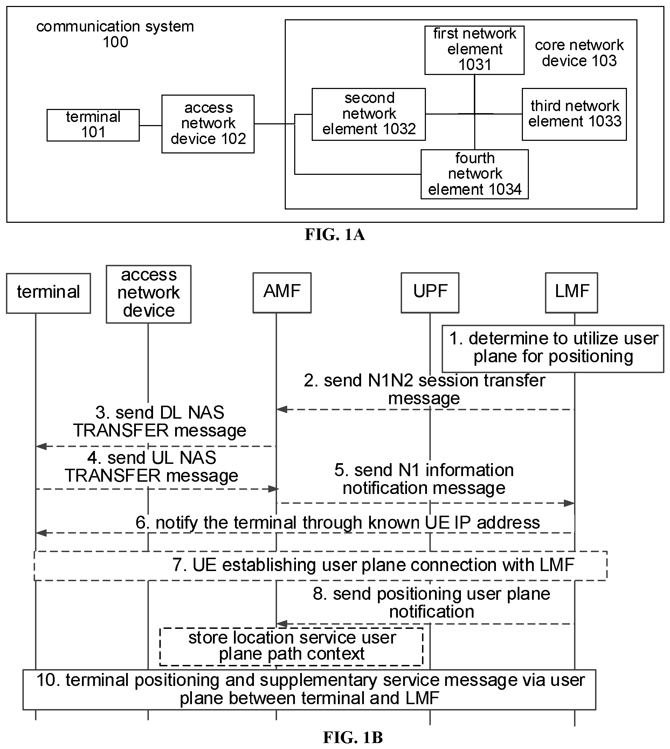

FIG. 1A is a schematic diagram illustrating an architecture of a communication system according to an embodiment of the disclosure. As illustrated in FIG. 1A, the communication system 100 may include at least one of a terminal 101, an access network device 102, or a core network device 103.

In some embodiments, the terminal 101 includes, for example but is not limited to, at least one of a mobile phone, a wearable device, an Internet of Things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home.

In some embodiments, the access network device 102 is, for example, a node or device that connects a terminal to a wireless network. The access network device may include, but is not limited to, at least one of an evolved NodeB (eNB) in a fifth generation (5G) communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a sixth generation (6G) communication system, an open RAN, a cloud RAN, a base station in other communication systems, or an access node in a wireless fidelity (WiFi) system.

In some embodiments, the technical solution of the disclosure is applicable to an Open RAN architecture. In this case, interfaces between or within access network devices involved in embodiments of the disclosure may be internal interfaces of Open RAN, and processes and information interactions between these internal interfaces may be implemented through software or programs.

In some embodiments, the access network device may be composed of a central unit (CU) and a distributed unit (DU), where the CU may also be called a control unit. Using the CU-DU structure, protocol layers of the access network device may be split, where functions of some protocol layers are placed in the CU for centralized control, and functions of the remaining part or all of the protocol layers are distributed in the DUs, with the CU being centrally controlling the DUs. However, the disclosure is not limited thereto.

In some embodiments, the core network device 103 may be a single device selected from a group including a first network element 1031, a second network element 1032, a third network element 1033, a fourth network element 1034, etc., or may be multiple devices or a device group including all or part of the first network element 1031, the second network element 1032, the third network element 1033, the fourth network element 1034, etc. The network elements may be virtual or physical. The core network includes, for example, at least one of an Evolved Packet Core (EPC), a 5G Core Network (5GCN), or a Next Generation Core (NGC).

In some embodiments, the first network element 1031 is configured to provide session management functions, for example, a Session Management Function (SMF).

In some embodiments, the second network element 1032 is configured to provide access and mobility management functions, for example, an Access and Mobility Management Function (AMF).

In some embodiments, the third network element 1033 is configured to provide positioning services, for example, a Location Management Function (LMF), but the name is not limited thereto. For example, the third network element may also be a network element providing other services inside the core network. For example, the third network element may be a Sensing Function (SF) providing sensing services, or other core network elements providing services.

In some embodiments, the fourth network element 1034 is configured to provide user plane functions, for example, a User Plane Function (UPF).

In some embodiments, a communication system for communicating via a control plane may include a terminal, an access network device, a second network element, and a first network element. The terminal is connected to the access network device, the access network device is connected to the second network element, and the second network element is connected to the first network element. The system may also include other network elements or devices, which are not limited.

In some embodiments, a communication system for communicating via a control plane may include a terminal, an access network device, a second network element, and a third network element. The terminal is connected to the access network device, the access network device is connected to the second network element, and the second network element is connected to the third network element. The system may also include other network elements or devices, which are not limited.

In some embodiments, a communication system for communicating via a user plane may include a terminal, an access network device, a fourth network element, and a third network element. The terminal is connected to the access network device, the access network device is connected to the fourth network element, and the fourth network element is connected to the third network element. The system may also include other network elements or devices, which are not limited.

It may be understood that the communication system according to embodiments of the disclosure is to more clearly illustrate the technical solutions of embodiments of the disclosure, and does not constitute a limitation on the technical solutions according to embodiments of the disclosure. Those of ordinary skill in the art may know that with the evolution of system architecture and the emergence of new business scenarios, the technical solutions according to embodiments of the disclosure are equally applicable to similar technical problems.

The following embodiments of the disclosure may be applied to the communication system 100 illustrated in FIG. 1A or part of the entities of the communication system 100 illustrated in FIG. 1A, but the disclosure is not limited thereto. The entities illustrated in FIG. 1A are examples. The communication system may include all or part of the entities in FIG. 1A or may include entities other than those in FIG. 1A. The number of entities and the form of each entity are arbitrary. The connection relationships between the entities are examples. The entities may be connected or not connected, and the connection may be in any manner, direct or indirect, wired or wireless.

Embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM^{®}), CDMA2000, Ultra Mobile Broadband (UMB), IEEE 802.11 (Wi-Fi^{®}), IEEE 802.16 (WiMAX^{®}), IEEE 802.20, Ultra-WideBand (UWB), Bluetooth^{®}, Public Land Mobile Network (PLMN) network, Device-to-Device (D2D) system, Machine to Machine (M2M) system, Internet of Things (IoT) system, Vehicle-to-Everything (V2X), systems using other path establishment methods, next-generation systems extended based on them, etc. In addition, multiple systems may be combined (e.g., a combination of LTE or LTE-A and 5G, etc.).

FIG. 1B is a flowchart illustrating a method of initiating user plane path establishment via a core network element according to an embodiment of the disclosure. As illustrated in FIG. 1B, the method may include the following.
1. LMF determines to utilize user plane for positioning.
2. LMF sends user plane information of LMF to AMF via an N1N2 transfer message (invoking Namf_Communication_N1N2Transfer service), where the user plane information may be, for example, an identifier of the LMF and/or an Internet Protocol (IP) address of the LMF.
3. AMF sends a downlink non-access stratum transport (DL NAS TRANSPORT) message to the terminal, where the DL NAS TRANSPORT message includes the user plane information of the LMF. The above-mentioned terminal may also be referred to as User Equipment (UE).
4. The terminal sends an uplink non-access stratum transport (UL NAS TRANSPORT) message to the AMF, where the UL NAS TRANSPORT message includes a User Plane Positioning Acknowledge. The User Plane Positioning Acknowledge may include a terminal IP address.
5. AMF sends the User Plane Positioning Acknowledge to the LMF via an N1 information notification message (invoking the Namf_N1MessageNotify service).
6. AMF notifies the terminal to establish a user plane path based on the terminal IP address.
7. The terminal establishes a user plane path with the LMF.
8. LMF sends a positioning user plane notification (invoking the Nlmf_Location_UPNotify service) to the AMF, where the positioning user plane notification includes the User Plane Positioning Acknowledge.
9. AMF stores a Location Service (LCS) user plane path context.
10. Terminal positioning and supplementary service messages are exchanged between the terminal and the LMF via the user plane.

The user plane path in the method illustrated in FIG. 1B is established between the terminal and the LMF, and there is no method for establishing a user plane path between an access network device and a core network element (such as an LMF), thus failing to achieve the purpose of "the access network device providing data to the core network element via a user plane path".

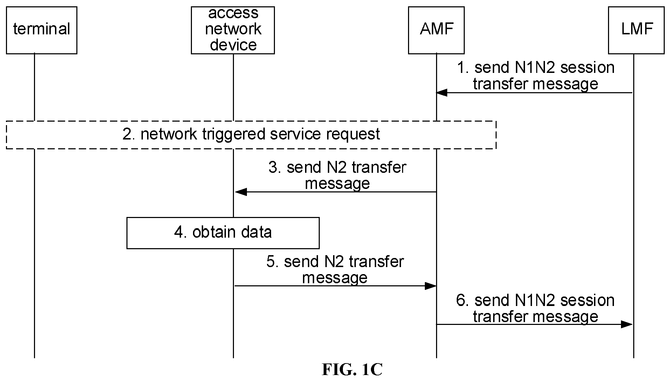

FIG. 1C is a flowchart illustrating a method of obtaining service data from an access network device via a core network element according to an embodiment of the disclosure. As illustrated in FIG. 1C, the method may include the following.
1. LMF sends an N1N2 session transfer message (invoking the Namf_Communication_NonUeN2MessageTransfer service) to the AMF network element to trigger a network service message and request service data (e.g., request network assistance data).
2. The network triggers a service request, which is used for establishing a control plane signaling connection between the terminal and the network when the terminal is in an idle state.
3. The AMF network element sends an N2 Transport message to the access network device to forward the service data request received from the LMF to the access network device.
4. The access network device obtains data.
5. The access network device sends an N2 Transport message to the AMF network element, where the N2 Transport message carries the service data requested by the LMF network element.
6. The AMF network element sends an N1N2 session transfer message (invoking the Namf_Communication_NonUeN2InfoNotify service) to the LMF network element, where the N1N2 session transfer message carries the service data requested by the LMF network element.

In the method illustrated in FIG. 1C, the LMF network element obtains service data from the access network device via the AMF network element, i.e., the core network element obtains service data from the access network device via a control plane path. When the core network element needs to obtain a relatively large amount of data from the access network device, if the data is still transmitted via the control plane, the transmission efficiency will be low. Therefore, introducing a method for "core network element obtaining data from the access network device via the user plane (UP)" is considered.

It should be noted that in a service-based architecture, sending a message between network elements may be achieved, for example, by invoking corresponding services, and a response to the message may be, for example, an output after a corresponding service is invoked. The same rule applies in the description of the subsequent embodiments.

One end of the user plane path described in embodiments of the disclosure is the access network device. For example, the user plane path may include two ends, one end of which is connected to the access network device. The access network device is a device connected to one end of the user plane path. Or it may be understood that the user plane path terminates at the access network device. Or it may also be understood that the user plane path is a special user plane path unrelated to the terminal. The user plane path based on this user plane path is different from an existing user plane path originating from the terminal. One end of the data on the user plane path based on this user plane path terminates at the access network device, for example, a service data packet packaged and sent by the access network device or a service data packet received and parsed by the access network device. This user plane path is used for connecting the access network device and the data network via the user plane path, where the data network is a data network to which the first service server belongs. This data network may be a dedicated data network for the first service server or a data network shared with other service servers.

When there is no user plane path, a user plane path needs to be currently established. When there is a user plane path, the existing user plane path may be directly used or modified, and then the access network device provides data to the core network element via a related user plane path.

In embodiments of the disclosure, the user plane path means that the access network device connects to the data network to which the first network element belongs via the fourth network element (access network device - fourth network element - DN). The user plane path may be that the access network device connects to the first network element via the fourth network element (access network device - fourth network element - first network element), where the user plane path may be understood to cover the concept of user plane connection. After the establishment of the user plane path is completed, the established user plane path between the two end devices (access network device and first network element) for user plane data transmission. Based on specific implementations, the user plane path establishment may also involve explicit connection establishment processing for data packet encapsulation and sending, may only involve data packet encapsulation and sending based on the address information of the opposite end, or may involve data packet encapsulation and sending directly according to a data flow (e.g., QoS flow).

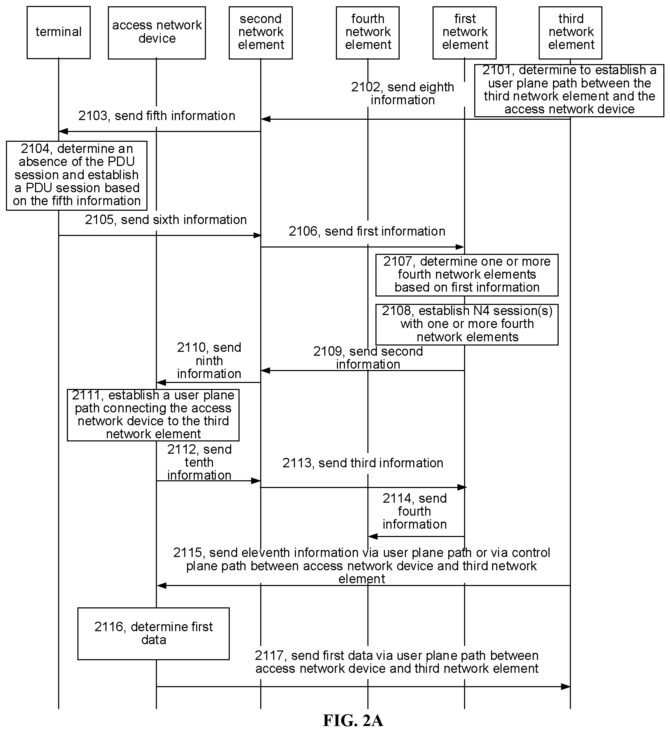

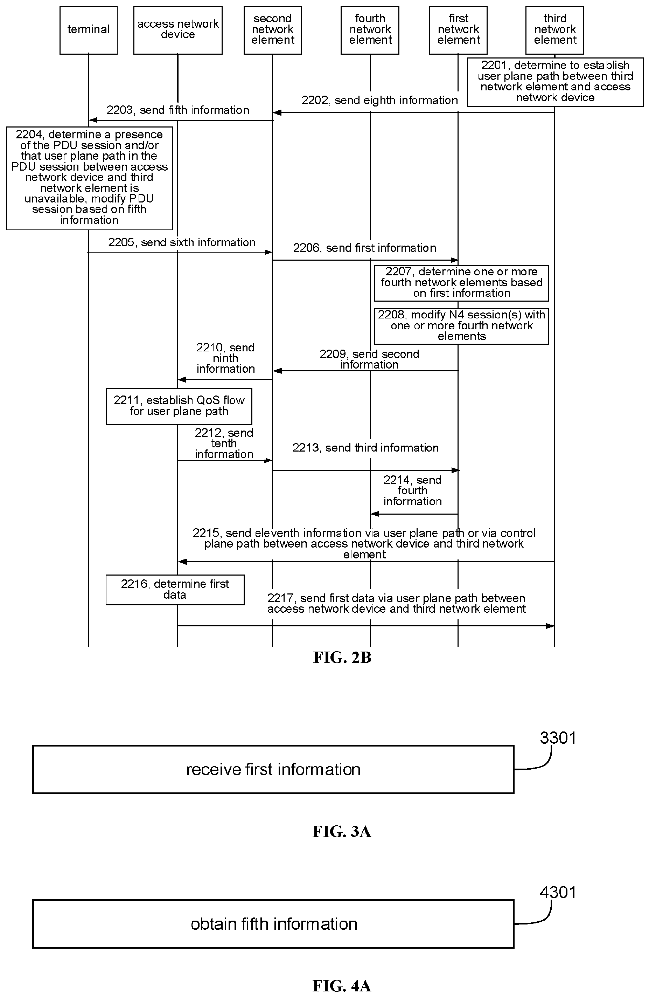

Methods for establishing a path according to the disclosure are introduced below in connection with FIG. 2A and FIG. 2B. An embodiment illustrated in FIG. 2A is an embodiment of establishing a user plane path between an access network device and a third network element by "establishing" a PDU session between a terminal and a data network where the third network element is located. The embodiment illustrated in FIG. 2B is an embodiment of establishing a user plane path between an access network device and a third network element by "modifying" a PDU session between a terminal and a data network where the third network element is located. The "indication information" involved in FIG. 2A and FIG. 2B is described as follows.

Generally, the indication information may cover one meaning, i.e., (a) the indication information may be used for indicating "establishing a user plane path between an access network device and a third network element". The indication information may also cover two meanings, i.e., (b) the indication information may be used for indicating "establishing a user plane path between an access network device and a third network element" "through a PDU session between a terminal and a data network where the third network element is located".

In the embodiments illustrated in FIG. 2A and FIG. 2B, the indication information is exchanged among the third network element, the second network element, the terminal, and the first network element. In different interaction processes, the meaning of the indication information may be different. The establishment mode of the user plane path between the access network device and the third network element is determined by any one of the first network element, the second network element, or the third network element. This is specifically divided into the following three cases.

### (I) The third network element decides whether to establish the user plane path through a PDU session

In this case, two scenarios are discussed.
(1) First scenario: If the third network element decides to establish the user plane path through a PDU session, the indication information sent by the third network element to the second network element is used for indicating the situation described in (b) above, i.e., when the third network element decides to establish the user plane path through a PDU session, the indication information sent by the third network element to the second network element covers two meanings.

It should be noted that the indication information sent by the third network element to the second network element does not include establishing the user plane path by "establishing or modifying" the PDU session. The third network element does not decide to "establish or modify" the PDU session, but decides whether to establish the user plane path "through" the PDU session. Whether to specifically establish or modify the PDU session is not decided by the third network element.

After receiving the indication information sent by the third network element, the second network element may send the indication information to the terminal or the first network element. The above is discussed in the following scenarios.

### 1) The terminal initiates the PDU session establishment procedure

The indication information sent by the second network element to the terminal is used for indicating the situation described in (b) above, i.e., when the third network element decides to establish the user plane path through a PDU session, the indication information sent by the second network element to the terminal covers two meanings. For example, the indication information sent by the second network element to the terminal is used for indicating "establishing a user plane path between the access network device and the third network element through a PDU session between the terminal and the data network where the third network element is located".

After receiving the indication information sent by the second network element, the terminal determines whether there is an existing available PDU session. If there is no existing available PDU session, the terminal initiates the PDU session establishment procedure and sends the indication information to the second network element. In detail, the terminal sends, to the second network element, information for indicating "establishing a user plane path between the access network device and the third network element by establishing a PDU session between the terminal and the data network where the third network element is located". The indication information may be the same as (b). Or the indication information may be different from (b), i.e., "by establishing a PDU session between the terminal and the data network where the third network element is located" may be implicitly indicated in the PDU session establishment procedure sent by the terminal to the second network element, and the indication information only indicates "establishing a user plane path between the access network device and the third network element", i.e., (a).

After receiving the indication information sent by the terminal, the second network element sends the indication information to the first network element. The indication information sent by the second network element to the first network element is used for indicating the situation described in (b) above, i.e., when the third network element decides to establish the user plane path through a PDU session and the terminal initiates the session establishment, the indication information sent by the second network element to the first network element is the same as the indication information sent by the terminal to the second network element in the session establishment request.

### 2) The terminal initiates the PDU session modification procedure

The indication information sent by the second network element to the terminal is used for indicating the situation described in (b) above, i.e., when the third network element decides to establish the user plane path through a PDU session, the indication information sent by the second network element to the terminal covers two meanings. In detail, the indication information sent by the second network element to the terminal is used for indicating "establishing a user plane path between the access network device and the third network element through a PDU session between the terminal and the data network where the third network element is located".

After receiving the indication information sent by the second network element, the terminal determines whether there is an existing available PDU session. If there is an existing available PDU session, the terminal initiates the PDU session modification procedure and sends the indication information to the second network element. In detail, the terminal sends, to the second network element, information for indicating "establishing a user plane path between the access network device and the third network element by modifying a PDU session between the terminal and the data network where the third network element is located". The indication information may be the same as (b). Or the indication information may be different from (b), i.e., "by modifying a PDU session between the terminal and the data network where the third network element is located" may be implicitly indicated in the PDU session modification procedure sent by the terminal to the second network element, and the indication information only indicates "establishing a user plane path between the access network device and the third network element", i.e., (a).

After receiving the indication information sent by the terminal, the second network element sends the indication information to the first network element. The indication information sent by the second network element to the first network element is the same as the indication information in the session medication request sent by the terminal to the second network element.

### 3) The first network element initiates the PDU session modification procedure

The indication information sent by the second network element to the first network element is used for indicating the situation described in (b) above, i.e., when the third network element decides to establish the user plane path through a PDU session, the indication information sent by the second network element to the first network element covers two meanings. In detail, the indication information sent by the second network element to the first network element is used for indicating "establishing a user plane path between the access network device and the third network element by modifying a PDU session between the terminal and the data network where the third network element is located".

(2) Second scenario: If the third network element does not decide to establish the user plane path through a PDU session, the indication information sent by the third network element to the second network element is used for indicating the situation described in (a) above, i.e., when the third network element does not decide to establish the user plane path through a PDU session, the indication information covers one meaning.

After receiving the indication information sent by the third network element, the second network element may send the indication information to the terminal or the first network element. The indication information sent by the second network element to the terminal or the first network element may be used for indicating the situation described in (a) or the situation described in (b), depending on whether the second network element decides to establish the user plane path through a PDU session:

(II) The second network element decides whether to establish the user plane path through a PDU session

The above is discussed in the following scenarios.

(3) If the second network element decides to establish the user plane path through a PDU session, the indication information sent by the second network element to the terminal or the first network element is used for indicating the situation described in (b) above, i.e., when the third network element does not decide to establish the user plane path through a PDU session but the second network element decides to establish the user plane path through a PDU session, the indication information sent by the second network element to the terminal or the first network element covers two meanings.

It is similar to the above-discussed initiating the PDU session establishment procedure or the PDU session modification procedure by the terminal or initiating the PDU session modification procedure by the first network element, which is not repeated here.

(4) If the second network element does not decide to establish the user plane path through a PDU session, the indication information sent by the second network element to the terminal or the first network element is used for indicating the situation described in (a), i.e., when the third network element does not decide to establish the user plane path through a PDU session and the second network element also does not decide to establish the user plane path through a PDU session, the indication information sent by the second network element to the terminal or the first network element covers one meaning.

It is similar to the above-discussed initiating the PDU session establishment procedure or the PDU session modification procedure by the terminal or initiating the PDU session modification procedure by the first network element, with the difference being:
for the PDU session establishment procedure or PDU session modification procedure initiated by the terminal, the indication information sent by the second network element to the terminal covers one meaning. After receiving the indication information, the terminal may decide to establish the user plane path through a PDU session and determine whether there is an existing available PDU session. If the terminal determines a presence of an existing available PDU session, the terminal initiates the PDU session modification procedure. If the terminal determines an absence of an available PDU session, the terminal initiates the PDU session establishment procedure and sends indication information to the second network element. In detail, the terminal sends, to the second network element, information for indicating "establishing a user plane path between the access network device and the third network element by establishing or modifying a PDU session between the terminal and the data network where the third network element is located". The indication information may be the same as (b). Or indication information may be different from (b), i.e., "by modifying or establishing a PDU session between the terminal and the data network where the third network element is located" may be implicitly indicated in the PDU session modification or establishment procedure sent by the terminal to the second network element, and the indication information only indicates "establishing a user plane path between the access network device and the third network element", i.e., (a).

For the case where the PDU session modification procedure is initiated by the first network element, the indication information sent by the second network element to the first network element covers one meaning. After receiving the indication information, the first network element may decide whether to establish the user plane path through a PDU session, i.e., the following (III).

(III) The first network element decides whether to establish the user plane path through a PDU session.

For (III), if neither the first network element nor the second network element decides whether to establish the user plane path through a PDU session, the first network element may decide whether to establish the user plane path through a PDU session.

It is similar to the above-discussed initiating the PDU session establishment procedure by the terminal or initiating the PDU session modification procedure by the first network element, with the difference being:
for the case where the PDU session establishment procedure is initiated by the terminal, the first network element triggers the PDU session establishment procedure. The indication information sent by the second network element to the first network element is used for indicating the situation described in (a) above, i.e., when the third network element does not decide to establish the user plane path through a PDU session and the second network element also does not decide to establish the user plane path through a PDU session, the indication information sent by the second network element to the first network element covers one meaning, i.e., (a). In detail, the indication information sent by the second network element to the first network element is used for indicating "establishing a user plane path between the access network device and the third network element". The first network element sends information to the terminal via the second network element to indicate the terminal to execute the PDU session establishment procedure to "establish a user plane path between the access network device and the third network element". It should be noted that the first network element does not "execute" the PDU session establishment procedure, but the terminal does. The terminal initiates the PDU session establishment procedure based on related information, which is similar to the PDU session establishment initiated by the terminal discussed above, and is not repeated here.

The embodiments of FIG. 2A and 2B are described in detail below.

FIG. 2A is a schematic diagram illustrating an interaction of a method for establishing a path according to an embodiment of the disclosure. As illustrated in FIG. 2A, this embodiment of the disclosure relates to a method for establishing a path performed by a communication system 100. The method includes the following.

At step 2101, a third network element determines to establish a user plane path between the third network element and an access network device.

In some embodiments, the third network element may be a core network element, such as a service Network Function (service NF). For example, the third network element may be configured to provide location service functions, such as a Location Management Function (LMF). For example, the third network element may also be a network element providing other service functions inside the core network, such as a Sensing Function (SF) providing sensing services, a core network element providing other service functions, or a core network element providing multiple service functions, etc.

In some embodiments, the user plane path is used for sending and/or receiving first data related to a first service. The scope of the first service is not limited in the disclosure, and it may be, for example, a sensing service or a positioning service.

For example, in some embodiments, the third network element may be a service server outside the core network, such as a service server deployed by an operator or a third-party service server, which is not limited in the disclosure.

For example, in some embodiments, the third network element may determine to establish a user plane path between the third network element and the access network device based on information such as the capability of the access network device, network congestion status, and the capability of the core network. The disclosure does not limit the trigger reason for the third network element to determine to establish the user plane path.

At step 2102, the third network element sends eighth information to a second network element.

In some embodiments, the third network element sends the eighth information to the second network element to indicate to the second network element that a user plane path between the third network element and the access network device needs to be established.

In some embodiments, the second network element is configured to provide access and mobility management functions, for example, an Access and Mobility Management Function (AMF).

In some embodiments, the eighth information is used in establishing the user plane path between the third network element and the access network device.

In some embodiments, the eighth information includes at least one of: indication information used for indicating establishing the user plane path; user plane information of the third network element; information of the access network device; a data network name (DNN) of the data network where the third network element is located; or single network slice selection assistance information (S-NSSAI) of the data network where the third network element is located.

In some embodiments, the indication information indicates establishing the user plane path between the third network element and the access network device, indicates that a user plane path to the third network element needs to be established, with the other end of the user plane path being the access network device implied by the access network device information, or indicates that a user plane path needs to be established, with the two ends of the user plane path being the access network device implied by the access network device information and the third network element implied by the user plane information of the third network element, respectively.

In some embodiments, the third network element may send the eighth information to the second network element via a second message. The name of second message may be, for example but is not limited to, a Namf_Communication_N1N2MessageTransfer message.

At step 2103, the second network element sends fifth information to a terminal.

In some embodiments, the second network element sends the fifth information to the terminal to establish the user plane path between the third network element and the access network device through the PDU session established by the terminal.

In some embodiments, the fifth information includes at least one of: indication information used for indicating establishing the user plane path, user plane information of the third network element, a data network name (DNN) of the data network where the third network element is located, or single network slice selection assistance information (S-NSSAI) of the data network where the third network element is located.

Since the DNN and/or S-NSSAI may be used to identify the data network where the third network element is located, the terminal may determine whether a PDU session needs to be established between the terminal and the third network element corresponding to this data network based on the DNN and/or S-NSSAI and other information. For example, the DNN and/or the S-NSSAI may be provided by the network, i.e., the fifth information may include the DNN and/or the S-NSSAI. For example, the DNN and/or the S-NSSAI may be derived by the terminal based on local information through related information of the third network element (such as user plane information of the third network element), i.e., the fifth information may not include the DNN and/or the S-NSSAI.

In some embodiments, the terminal may determine whether a PDU session needs to be established, for example, determine whether a PDU session connecting the terminal to the data network corresponding to the DNN and/or the S-NSSAI needs to be established based on the DNN and/or the S-NSSAI. In other words, the terminal may determine whether a PDU session containing a user plane path connecting the terminal and the data network where the third network element is located already exists. If no related session is available, the terminal decides to establish a new PDU session, or if a related session is available, the terminal modifies the existing PDU session.

For example, in a first case, the fifth information is used in establishing a PDU session, where the first case is that the terminal determines an absence of an available PDU session. The PDU session connects the terminal and the data network where the third network element is located, where the data network is identified by the DNN and/or the S-NSSAI. In other words, the data network where the third network element is located, to which the PDU session connects, is identified by the DNN and/or the S-NSSAI. If the terminal determines an absence of the user plane path between the third network element covered by the data network identified by the DNN and/or the S-NSSAI and the terminal, i.e., no PDU session has been established between the terminal and the data network where the third network element is located, then the fifth information received by the terminal may be used to assist the terminal in establishing this PDU session, to establish the user plane path between the access network device and the third network element by establishing this PDU session.

For example, in a second case, the fifth information is used in modifying a PDU session to add, to the PDU session, the user plane path between the access network device and the data network where the third network element is located, where the second case is that the terminal determines a presence of the PDU session, and/or the user plane path between the access network device and the third network element in the PDU session is unavailable. Similarly, the PDU session connects the terminal and the data network where the third network element is located, where the data network is identified by the DNN and/or the S-NSSAI. If the terminal determines that a user plane path already exists between the third network element covered by the data network identified by DNN and/or S-NSSAI and the terminal, i.e., a PDU session has been established between the terminal and the data network where the third network element is located, then the fifth information received by the terminal may be used to assist the terminal in modifying the PDU session, to add the user plane path between the access network device and the third network element by modifying the PDU session.

For example, in some embodiments, the fifth information sent by the second network element to the terminal may be different from, partially the same as, or completely the same as the eighth information received by the second network element from the third network element.

For example, when the terminal is in a connected state, the second network element may send the fifth information via a third message. The name of third message may be, for example but is not limited to, a downlink NAS transport message (DL NAS TRANSPORT (User Plane Information)), etc.

For example, when the terminal is in an idle state, the second network element may activate the terminal by sending a message such as a Network Triggered Service Request before sending the fifth information. It should be understood that when the second network element sends a message for activating the terminal, the activation message may include the fifth information. In other words, the fifth information may not be sent when the terminal is in an idle state.

At step 2104, the terminal determines an absence of the PDU session and establishes a PDU session based on the fifth information.

In some embodiments, the terminal determines an absence of the PDU session, and the terminal establishes a PDU session based on the fifth information, where the data network where the third network element is located, to which the PDU session connects, is identified by the DNN and/or the S-NSSAI.

In some embodiments, the DNN and/or the S-NSSAI are obtained from the fifth information sent by the second network element, obtained from the third network element, or obtained locally from the terminal.

At step 2105, the terminal sends sixth information to the second network element.

In some embodiments, the terminal sends the sixth information to the second network element to establish a PDU session, to establish the user plane path between the third network element and the access network device.

In some embodiments, the sixth information is used in establishing a PDU session.

In some embodiments, the sixth information includes at least one of: indication information used for indicating establishing the user plane path; user plane information of the third network element; a data network name (DNN) of the data network where the third network element is located; single network slice selection assistance information (S-NSSAI) of the data network where the third network element is located; location information of the terminal; or information of the access network device, where the access network device is the access network device that the user plane path needs to connect to.

For example, the terminal may send the sixth information via a fifth message. The name of the fifth message may be, for example but is not limited to, a PDU Session Establishment Request.

At step 2106, the second network element sends first information to a first network element.

In some embodiments, the second network element sends the first information to the first network element to establish the user plane path between the access network device and the third network element.

In some embodiments, the first network element may be configured to provide session management functions, for example, a Session Management Function (SMF).

In some embodiments, the first information is used in establishing the user plane path between the access network device and the third network element, to establish the user plane path between the access network device and the third network element by establishing a protocol data unit (PDU) session between the terminal and the data network where the third network element is located.

In some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device, the access network device being the access network device that the user plane path needs to connect to.

In some embodiments, the access network device provides a service to the terminal, or the access network device provides no service to the terminal.

For example, the access network device that the user plane path between the access network device and the third network element needs to connect to is not the access network device providing a service to the terminal.

For example, the access network device that the user plane path between the access network device and the third network element needs to connect to may be the access network device providing a service to the terminal.

For example, the access network device that the user plane path between the access network device and the third network element needs to connect to may be the access network device that determines the first data. In other words, the access network device may collect service data from the terminal it serves, collect service data collected by other access network devices (or other devices), or generate service data itself.

In some embodiments, the first information is carried by a first message, the first message being used to request establishment of a PDU session context. The first message may be, for example but is not limited to, an Nsmf_PDUSession_CreateSMContext Request message, etc.

For example, in some embodiments, the second network element may also receive a response message sent by the first network element in response to the first information, such as an Nsmf_PDUSession_CreateSMContext Response message, etc., but is not limited thereto.

At step 2107, the first network element determines one or more fourth network elements based on the first information.

In some embodiments, the fourth network element is configured to provide user plane functions, for example, a User Plane Function (UPF). For example, the fourth network element may be used in establishing a PDU session, to establish a user plane path between the third network element and the access network device.

In some embodiments, the first network element may determine one or more fourth network elements based on the first information. The method of determine the fourth network element(s) by the first network element based on the first information may include that: the first network element first determines the location of a target access network device and/or the location of a third network element based on the first information (for example, the first network element may determine the location of the target access network device determined based on the information of the access network device in the first information and the first network element may determine the location of the third network element based on the user plane information of the third network element in the first information (e.g., after determining the specific corresponding third network element based on the user plane information of the third network element, the specific location of the third network element may be determined)), and then the first network element may determine the fourth network element(s) based on the location of the target access network device and/or the location of the third network element (for example, the determined fourth network element(s) may be network element(s) close to the target access network device and/or the third network element).

In some embodiments, the first network element may determine one or more fourth network elements based on the information of the access network device. That is, the fourth network element used to connect to the user plane of the access network device may be different from the fourth network element for the terminal to connect via its serving access network device.

At step 2108, the first network element establishes or modifies N4 session(s) with the one or more fourth network elements.

In some embodiments, the first network element may establish or modify an N4 session with each of the one or more fourth network elements determined in step 2107. Since the third network element and the access network device need to establish a user plane path via the fourth network element, the first network element may subsequently exchange information with the fourth network element through the N4 session to realize the establishment of the user plane path between the third network element and the access network device.

At step 2109, the first network element sends second information to the second network element.

In some embodiments, the first network element sends the second information to the second network element to request the access network device to establish a user plane path for connecting the access network device and the third network element. This user plane path connects the access network device and the data network where the third network element is located. The establishment of this user plane path may be achieved through a special QoS flow, which corresponds to the user plane path between the access network device and the third network element.

In some embodiments, the second information includes at least one of: core network tunnel information of the one or more fourth network elements selected by the first network element; a requested QoS flow; a requested QoS flow related QoS parameter; or user plane information of the third network element.

In some embodiments, the second information is used for requesting an establishment of a QoS flow corresponding to the user plane path between the access network device and the third network element.

For example, the first network element may send the second information via a sixth message. The sixth message may be, for example but is not limited to, an Namf_Communication_N1N2Message Transfer message, etc.

At step 2110, the second network element sends ninth information to the access network device.

In some embodiments, the second network element sends the ninth information to the access network device, requesting the access network device to establish a user plane path for connecting the access network device and the third network element. The establishment of the user plane path may be achieved through a special QoS flow, which corresponds to the user plane path between the access network device and the third network element.

In some embodiments, the ninth information includes at least one of: core network tunnel information of the one or more fourth network elements selected by the first network element; a requested QoS flow; a requested QoS flow related QoS parameter; or user plane information of the third network element.

In some embodiments, the ninth information is completely the same as or partially the same as the second information. Being partially the same may mean that part of the second information is the same as the ninth information or part of the ninth information is the same as the second information. In other words, the second network element may forward the second information received from the first network element to the access network device, i.e., the first network element may send the second information to the access network device via the second network element. When the first network element sends the second information to the second network element, in addition to including the N2 information that needs to be forwarded to the access network, it also includes N1 information. The second information and the ninth information described here only relate to N2 information.

In some embodiments, the ninth information may be different from the second information. For example, the ninth information is generated based on the second information and existing information of the second network element.

For example, the second network element may send the ninth information via a seventh message. The seventh message may be, for example but is not limited to, an N2 PDU Session Request message, etc.

At step 2111, the access network device establishes a user plane path connecting the access network device and the third network element.

In some embodiments, in addition to the PDU session establishment behavior, the access network device may also establish a user plane path connecting the access network device and the third network element based on the ninth information. The establishment of this user plane path may be achieved through a special QoS flow, which corresponds to the user plane path between the access network device and the third network element.

At step 2112, the access network device sends tenth information to the second network element.

In some embodiments, the access network device sends the tenth information to the second network element in response to the ninth information sent by the second network element in step 2110.

In some embodiments, in response to the ninth information, the tenth information is used for sending related information requested by the ninth information.

In some embodiments, the tenth information includes at least one of: capability information of the access network device; access network tunnel information of the access network device; access network tunnel information for a terminal related QoS flow; or access network tunnel information for a terminal unrelated QoS flow.

In other words, if the access network tunnel information for other terminal related QoS flow is different from the access network tunnel information of the QoS flow used for the user plane of the access network device, the access network tunnel information for other terminal related QoS flow may also be sent to the second network element.

For example, the access network device may send the tenth information via an eighth message. The eighth message may be, for example but is not limited to, an N2 PDU Session Response message.

For example, in some embodiments, before step 2112, the access network device may also send seventh information to the terminal. The seventh information may be used for indicating accepting to establish the PDU session.

For example, the access network device may send the seventh information via a ninth message. The ninth message may be, for example but is not limited to, a PDU Session Establishment Accept message, etc.

At step 2113, the second network element sends third information to the first network element.

In some embodiments, the second network element sends the third information to the first network element to cause the first network element to initiate an N4 session modification.

In some embodiments, the third information includes at least one of: capability information of the access network device; access network tunnel information of the access network device; access network tunnel information for a terminal related QoS flow; or access network tunnel information for a terminal unrelated QoS flow.

In some embodiments, the third information may be partially or completely the same as the tenth information, or the tenth information may include the third information. In other words, the second network element may forward the tenth information received from the access network device to the first network element, and the access network device may send the tenth information to the first network element via the second network element.

For example, the second network element may send the third information via a tenth message. The tenth message may be, for example but is not limited to, an Nsmf_PDUSession_UpdateSMContext Request, etc.

At step 2114, the first network element sends fourth information to the fourth network element.

In some embodiments, the first network element sends the fourth information to the determined one or more fourth network elements to cause each fourth network element to perform an N4 session modification procedure.

In some embodiments, the fourth information includes at least one of: access network tunnel information; or a forwarding rule used for indicating a rule for the fourth network element to forward the first data.

In some embodiments, the fourth information is used for requesting a fourth network element to perform an N4 session modification.

In some embodiments, the forwarding rule for the fourth network element on the user plane path connecting the access network device and the third network element include at least one of: a first rule for indicating forwarding the first data associated with a QoS flow identifier (QFI); or a second rule for indicating forwarding the first data based on a destination address of the first data.

In some embodiments, the forwarding rule is a first rule, where the first rule indicates forwarding the first data associated with the QFI. In this case, the access network device is not aware of the user plane information of the third network element and/or the data packet generated by the access network device (or in other words, the first data determined by the access network device) includes no destination address of the first data encapsulated using the user plane information of the third network element.

In some embodiments, the forwarding rule is a second rule, where the second rule indicates forwarding the first data based on the destination address of the first data. In this case, the access network device is aware of the user plane information of the third network element, and the data packet generated by the access network device (or in other words, the first data determined by the access network device) includes a destination address of the first data encapsulated using the user plane information of the third network element.

For example, the first network element may send the fourth information via an eleventh message. The eleventh message may be, for example but is not limited to, an N4 Session Modification Request, etc.

For example, in some embodiments, the first network element may also receive a response message sent by the fourth network element based on the fourth information to determine whether the N4 session modification is successful. The response message may be, for example but is not limited to, an N4 Session Modification Response.

At step 2115, the third network element sends the eleventh information to the access network device.

In some embodiments, the third network element may send the eleventh information to the access network device via the established user plane path between the access network device and the third network element or via the control plane path between the access network device and the third network element to request the first data.

In some embodiments, the eleventh information is used for requesting the first data, where the first data is related to a first service, and a service server for the first service is the third network element.

In some embodiments, the eleventh information includes at least one of: first data request information; indication information used for indicating establishing the user plane path; user plane information of the third network element; or identifier information of the user plane path.

In some embodiments, the name of the first data request information is not limited, and it may be, for example, a Network Positioning Message, or a sensing data request message, etc.

In some embodiments, after establishing the user plane PDU session for the access network device (i.e., the user plane path between the access network device and the third network element), the first data may be sent via the established user plane path.

In some embodiments, in a case where the eleventh information is sent via the user plane path between the access network device and the third network element, the third network element may send (e.g., forward, transparently transmit, etc.) the eleventh information to the access network device via the fourth network element.

At step 2116, the access network device determines first data.

In some embodiments, the access network device may determine the first data, the first data being related to a first service. The scope of the first service is not limited in the disclosure, and the first service may be, for example, a sensing service or a positioning service.

In some embodiments, the name of the first data is not limited, and it may be "service data", "service data packet", "service-related data", etc.

In some embodiments, the first data may be a data packet.

In some embodiments, "the access network device determines the first data" may include at least one of "the access network device determines the first data generated by itself", "the access network device collects the first data generated by a terminal it serves", or "the access network device collects the first data collected by other access network devices".

In some embodiments, the access network device may determine service data of the first service and package the service data of the first service into a service data packet based on capability information of the access network device, as the first data. The service data packet includes a destination address of the service data packet encapsulated using the user plane information of the third network element, or the service data packet includes no destination address of the service data packet encapsulated using the user plane information of the third network element.

For example, "the access network device determines the first data generated by itself" may be that the access network device itself collects and generates (or measures) service data of the first service, and this data may be sent to the third network element via the established user plane path between the access network device and the third network element.

For example, "the access network device collects the first data generated by a terminal it serves" may be that a terminal served by the access network device generates service data of the first service and provides it to the access network device, and the access network device collects the service data. This data may be sent to the third network element via the established user plane path between the access network device and the third network element.

For example, "the access network device collects the first data collected by other access network devices" may be that the access network device to which the established user plane path connects serves as a first access network device, other access network devices serve as second access network devices, a terminal served by a second access network device generates service data of the first service and provides it to the first access network device, and the service data is collected and packaged by the first access network device. The data packet may be sent to the third network element via the established user plane path between the access network device and the third network element.

In some embodiments, the access network device has the capability of generating the service data of the first service or may obtain the service data of the first service via other entities.

At step 2117, the access network device sends first data to the third network element via the user plane path between the access network device and the third network element.

In some embodiments, the access network device may send the first data to the third network element via the user plane path between the access network device and the third network element.

In some embodiments, the access network device may send the first data to the fourth network element, and the fourth network element forwards the first data to the third network element, thereby realizing data transmission between the access network device and the third network element via the user plane path.

The method for establishing a path according to this embodiment of the disclosure may include at least one of steps 2101 to 2117. For example, step 2101 may be implemented as an independent embodiment, step 2102 may be implemented as an independent embodiment, step 203 may be implemented as an independent embodiment, and steps 2101 and 2102 may be implemented as an independent embodiment, which is not limited in the disclosure.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

In some embodiments, steps 2104, 2105, 2107, 2108, 2109, 2110, 2111, 2112, 2113, 2114, 2115, and 2116 are optional and may be omitted or replaced in different embodiments.

In some embodiments, reference may be made to other implementations described before or after the description corresponding to FIG. 2A.

FIG. 2B is a schematic diagram illustrating an interaction of a method for establishing a path according to an embodiment of the disclosure. As illustrated in FIG. 2B, this embodiment of the disclosure relates to a method for establishing a path performed by a communication system 100. The method includes the following.

At step 2201, a third network element determines to establish a user plane path between the third network element and an access network device.

For implementations of step 2201, reference may be made to step 2101 of FIG. 2A and other related parts of the embodiment related to FIG. 2A, which are not repeated here.

At step 2202, the third network element sends eighth information to a second network element.

For implementations of step 2202, reference may be made step 2102 of FIG. 2A and other related parts of the embodiment related to FIG. 2A, which are not repeated here.

At step 2203, the second network element sends fifth information to a terminal.

In some embodiments, the second network element sends the fifth information to the terminal to assist the terminal in modifying a PDU session to establish the user plane path between the third network element and the access network device.

In some embodiments, the fifth information includes at least one of: indication information used for indicating establishing the user plane path; user plane information of the third network element; a data network name (DNN) of the data network where the third network element is located; or single network slice selection assistance information (S-NSSAI) of the data network where the third network element is located.

Since the DNN and/or the S-NSSAI may be used for identifying the data network where the third network element is located, the terminal may determine whether a PDU session between the terminal and the third network element corresponding to this data network needs to be modified based on the DNN and/or the S-NSSAI. For example, the DNN and/or S-NSSAI may be provided by the network, and thus the fifth information may include the DNN and/or the S-NSSAI. For example, the DNN and/or the S-NSSAI may be derived by the terminal based on local information through related information of the third network element (such as user plane information of the third network element), and thus the fifth information may not include the DNN and/or the S-NSSAI.

In some embodiments, the terminal may determine whether a PDU session needs to be modified. For example, the terminal may determine whether a PDU session connecting the terminal to the data network corresponding to the DNN and/or the S-NSSAI needs to be modified based on the DNN and/or the S-NSSAI. In other words, the terminal may determine whether a PDU session containing a user plane path between the terminal and the data network where the third network element is located already exists, and/or whether the user plane path in that PDU session is available, thereby deciding to modify the existing PDU session.

For example, in a first case, the fifth information is used in establishing a PDU session, where the first case is that the terminal determines an absence of an available PDU session. The PDU session connects the terminal and the data network where the third network element is located, where the data network is identified by the DNN and/or the S-NSSAI. In other words, the data network where the third network element is located, to which the PDU session connects, is identified by the DNN and/or the S-NSSAI. If the terminal determines an absence of the user plane path between the third network element covered by the data network identified by the DNN and/or the S-NSSAI and the terminal, i.e., no PDU session has been established between the terminal and the data network where the third network element is located, then the fifth information received by the terminal may be used for assisting the terminal in establishing the PDU session, to establish the user plane path between the access network device and the third network element by establishing the PDU session.

For example, in a second case, the fifth information is used in modifying the PDU session to add the user plane path between the access network device and the data network where the third network element is located to the PDU session, where the second case is that the terminal determines a presence of the PDU session, and/or the user plane path between the access network device and the third network element in the PDU session is unavailable. Similarly, the PDU session connects the terminal and the data network where the third network element is located, where the data network is identified by the DNN and/or the S-NSSAI. If the terminal determines that a user plane path already exists between the third network element covered by the data network identified by the DNN and/or the S-NSSAI and the terminal, i.e., a PDU session has been established between the terminal and the data network where the third network element is located, then the fifth information received by the terminal may be used for assisting the terminal in modifying this PDU session, thereby adding the user plane path between the access network device and the third network element by modifying this PDU session.

For example, in some embodiments, the fifth information sent by the second network element to the terminal may be different from, partially the same as, or completely the same as the eighth information received by the second network element from the third network element.

For example, when the terminal is in a connected state, the second network element may send the fifth information via a third message. The name of the third message may be, for example but is not limited to, a downlink NAS transport message (DL NAS TRANSPORT (User Plane Information)), etc.

For example, when the terminal is in an idle state, the second network element may activate the terminal by sending a message, such as a Network Triggered Service Request, before sending the fifth information. It should be understood that when the second network element sends an activation message for activating the terminal, the activation message may include the fifth information. In other words, the fifth information may not be sent when the terminal is in an idle state.

At step 2204, the terminal determines a presence of a PDU session and/or that the user plane path between the access network device and the third network element in the PDU session is unavailable, and the terminal modifies the PDU session based on the fifth information.

In some embodiments, the terminal determines a presence of the PDU session, and/or the terminal determines that the user plane path between the access network device and the third network element in the PDU session is unavailable, and the terminal modifies the PDU session based on the fifth information, where the data network where the third network element is located, to which the PDU session connects, is identified by the DNN and/or the S-NSSAI.

In some embodiments, the DNN and/or the S-NSSAI are obtained from the fifth information sent by the second network element, obtained from the third network element, or obtained locally from the terminal.

At step 2205, the terminal sends sixth information to the second network element.

In some embodiments, the terminal sends the sixth information to the second network element to modify a PDU session, thereby establishing the user plane path between the third network element and the access network device.

In some embodiments, the sixth information is used in modifying a PDU session.

In some embodiments, the sixth information includes at least one of: indication information used for indicating establishing the user plane path; user plane information of the third network element; a data network name (DNN) of the data network where the third network element is located; single network slice selection assistance information (S-NSSAI) of the data network where the third network element is located; location information of the terminal; or information of the access network device, where the access network device is the access network device that the user plane path needs to connect to.

For example, the terminal may send the sixth information via a twelfth message. The name of the twelfth message may be, for example but is not limited to, a PDU Session Modification Request, etc.

In some embodiments, steps 2203 to 2205 are optional. The second network element may decide to reuse an existing PDU session, or the second network element may send the information to the first network element based on the eighth information (actively or based on the first network element's subscription), and the first network element decides to reuse an existing PDU session.

At step 2206, the second network element sends first information to a first network element.

In some embodiments, the second network element sends the first information to the first network element to establish the user plane path between the access network device and the third network element.

In some embodiments, the first network element may be used to provide session management functions, such as, a Session Management Function (SMF).

In some embodiments, the first information is used for establishing the user plane path between the access network device and the third network element, to establish the user plane path between the access network device and the third network element by modifying a protocol data unit (PDU) session between the terminal and the data network where the third network element is located.

In some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device, where the access network device is the access network device that the user plane path needs to connect to.

In some embodiments, the access network device provides a service to the terminal, or the access network device provides no service to the terminal.

For example, the access network device that the user plane path between the access network device and the third network element needs to connect to is not the access network device providing a service to the terminal.

For example, the access network device that the user plane path between the access network device and the third network element needs to connect to may be the access network device providing a service to the terminal.

For example, the access network device that the user plane path between the access network device and the third network element needs to connect to may be the access network device that determines the first data. In other words, the access network device may collect service data from the terminal it serves, collect service data collected by other access network devices (or other devices), or generate service data itself.

In some embodiments, the first information is carried by a first message, and the first message is used for requesting modification of a PDU session context. The first message may be, for example but is not limited to, an Nsmf_PDUSession_UpdateSMContext Request message, etc..

For example, in some embodiments, the second network element may also receive a response message sent by the first network element in response to the first information, such as but is not limited to, an Nsmf_PDUSession_UpdateSMContext Response message, etc.

At step 2207, the first network element determines one or more fourth network elements based on the first information.

For implementations of step 2207, reference may be made to step 2107 of FIG. 2A and other related parts of the embodiment related to FIG. 2A, which are not repeated here.

At step 2208, the first network element establishes or modifies one or more N4 sessions with the one or more fourth network elements.

In some embodiments, the first network element may establish or modify one or more N4 sessions with the one or more fourth network elements determined in step 2207. Since the third network element and the access network device need to establish a user plane path via the fourth network element, the first network element may subsequently exchange information with the fourth network element through the N4 session to realize the establishment of the user plane path between the third network element and the access network device.

At step 2209, the first network element sends second information to the second network element.

For implementations of step 2209, reference may be made to step 2109 of FIG. 2A and other related parts of the embodiment related to FIG. 2A, which are not repeated here.

At step 2210, the second network element sends ninth information to the access network device.

For implementations of step 2210, reference may be made to step 2110 of FIG. 2A and other related parts of the embodiment related to FIG. 2A, which are not repeated here.

At step 2211, the access network device establishes a user plane path connecting the access network device and the third network element.

For implementations of step 2211, reference may be made to step 2111 of FIG. 2A and other related parts of the embodiment related to FIG. 2A, which are not repeated here.

At step 2212, the access network device sends tenth information to the second network element.

In some embodiments, the access network device sends the tenth information to the second network element in response to the ninth information sent by the second network element in step 2210.

In some embodiments, in response to the ninth information, the tenth information is used for sending related information requested by the ninth information.

In some embodiments, the tenth information includes at least one of: capability information of the access network device; access network tunnel information of the access network device; access network tunnel information for a terminal related QoS flow; access network tunnel information for a terminal unrelated QoS flow.

In other words, if the access network tunnel information for other terminal related QoS flow is different from the access network tunnel information of the QoS flow used for the user plane of the access network device, the access network tunnel information for the other terminal related QoS flow may also be sent to the second network element.

For example, the access network device may send the tenth information via an eighth message. The name of the eighth message may be, for example but is not limited to, an N2 PDU Session Response message, etc.

For example, in some embodiments, before step 2212, the access network device may also send seventh information to the terminal.

For example, in a third case, the seventh information is PDU session modification command information, where the third case is that the second network element triggers the first network element to initiate a PDU session modification procedure. In this case, the access network device may send the seventh information via a thirteenth message. The name of thirteenth message may be, for example but is not limited to, a PDU Session Modification Command, etc.

For example, in a fourth case, the seventh information is PDU session modification feedback information, where the fourth case is that the second network element triggers the terminal to initiate a PDU session modification procedure. In this case, the access network device may send the seventh information via a fourteenth message. The name of the fourteenth message may be, for example but is not limited to, a PDU Session Modification ACK message, etc.

At step 2213, the second network element sends third information to the first network element.

In some embodiments, the second network element sends the third information to the first network element to cause the first network element to initiate an N4 session modification.

For implementations of step 2213, reference may be made to step 2113 of FIG. 2A and other related parts of the embodiment related to FIG. 2A, which are not repeated here.

At step 2214, the first network element sends fourth information to the fourth network element.

For implementations of step 2214, reference may be made to step 2114 of FIG. 2A and other related parts of the embodiment related to FIG. 2A, which are not repeated here.

At step 2215, the third network element sends eleventh information to the access network device via the user plane path or via the control plane path between the access network device and the third network element.

For implementations of step 2215, reference may be made step 2115 of FIG. 2A and other related parts of the embodiment related to FIG. 2A, which are not repeated here.

At step 2216, the access network device determines first data.

For implementations of step 2216, reference may be made to step 2116 of FIG. 2A and other related parts of the embodiment related to FIG. 2A, which are not repeated here.

At step 2217, the access network device sends first data to the third network element via the user plane path between the access network device and the third network element.

For implementations of step 2217, reference may be made to step 2117 of FIG. 2A and other related parts of the embodiment related to FIG. 2A, which are not repeated here.

The method for establishing a path according to this embodiment of the disclosure may include at least one of steps 2201 to 2227. For example, step 2201 may be implemented as an independent embodiment, step 2202 may be implemented as an independent embodiment, step 2203 may be implemented as an independent embodiment, and steps 2201 and 2202 may be implemented as an independent embodiment, which is not limited in the disclosure.

In this implementation or embodiment, in the absence of conflict, each step may be independent, arbitrarily combined, or have its order exchanged. Implementations or examples may be arbitrarily combined and may be arbitrarily combined with any steps of other implementations or embodiments.

In some embodiments, steps 2204, 2205, 2207, 2208, 2209, 2210, 2211, 2212, 2213, 2214, 2215, and 2216 are optional and may be omitted or replaced in different embodiments.

In some embodiments, reference may be made to other implementations described before or after the description corresponding to FIG. 2B.

The following embodiments relate to a method for establishing a path performed by the first network element 1031. The method includes the following.

At step 3101, first information is received.

For implementations of step 3101, reference may be made to step 2106 of FIG. 2A, step 2206 of FIG. 2B, and other related parts of embodiments related to FIG. 2A and FIG. 2B, which are not repeated here.

In some embodiments, the first network element 1031 receives the first information sent by the second network element 1032. The disclosure is not limited thereto. For example, the first network element 1031 may also receive the first information sent by other entities.

In some embodiments, the first network element 1031 obtains the first information defined by a protocol.

In some embodiments, the first network element 1031 performs processing to obtain the first information.

In some embodiments, the step 3101 is omitted, the first network element 1031 autonomously implements the function indicated by the first information, and the function is default or preset.

At step 3102, one or more fourth network elements are determined.

For implementations of step 3102, reference may be made to step 2107 of FIG. 2A, step 2207 of FIG. 2B, and other related parts of the embodiments related to FIG. 2A and FIG. 2B, which are not repeated here.

In some embodiments, the first network element 1031 determines one or more fourth network elements based on the first information. But the disclosure is not limited thereto. For example, the first network element 1031 may also determine one or more fourth network elements based on other information.

In some embodiments, the step 3102 is omitted, and the function is default or preset.

At step 3103, one or more N4 sessions with the one or more fourth network elements are established or modified.

For implementations of step 3103, reference may be made to step 2108 of FIG. 2A, step 2208 of FIG. 2B, and other related parts of the embodiments related to FIG. 2A and FIG. 2B, which are not repeated here.

In some embodiments, the first network element 1031 establishes one or more N4 sessions with the one or more fourth network elements.

In some embodiments, the first network element 1031 modifies one or more N4 sessions with the one or more fourth network elements.

In some embodiments, the step 3103 is omitted, and the function is default or preset.

At step 3104, second information is sent.

For implementations of step 3104, reference may be made to step 2109 of FIG. 2A, step 2209 of FIG. 2B, and other related parts of the embodiments related to FIG. 2A and FIG. 2B, which are not repeated here.

In some embodiments, the first network element 1031 sends the second information to the second network element 1032. But the disclosure is not limited thereto. For example, the first network element 1301 may also send second information to other entities.

In some embodiments, the step 3104 is omitted, and function is default or preset.

At step 3105, third information is received.

For implementations of step 3105, reference may be made to step 2113 of FIG. 2A, step 2213 of FIG. 2B, and other related parts of the embodiments related to FIG. 2A and FIG. 2B, which are not repeated here.

In some embodiments, the first network element 1031 receives the third information sent by the second network element 1032. But the disclosure is not limited thereto. The first network element 1031 may also receive third information sent by other entities.

In some embodiments, the first network element 1031 obtains third information defined by a protocol.

In some embodiments, the first network element 1031 performs processing to obtain the third information.

In some embodiments, the step 3105 is omitted. The first network element 1031 autonomously implements the function indicated by the third information, and the function is default or preset.

At step 3106, fourth information is sent.

For implementations of step 3106, reference may be made to step 2114 of FIG. 2A, step 2214 of FIG. 2B, and other related parts of the embodiments related to FIG. 2A and FIG. 2B, which are not repeated here.

In some embodiments, the first network element 1031 sends the fourth information to the fourth network element 1034. But the disclosure is not limited thereto. The first network element 1031 may also send the fourth information to other entities.

In some embodiments, the step 3106 is omitted, and the function is default or preset.

For a detailed introduction to steps 3101 and 3106, reference may be made to the description of above embodiments.

The method for establishing a path according to this embodiment of the disclosure may include at least one of steps 3101 to 3106. For example, the step 3101 may be implemented as an independent embodiment, the step 3102 may be implemented as an independent embodiment, the steps 3101 and 3102 may be implemented as an independent embodiment, which are not limited in the disclosure.

In some embodiments, steps 3102, 3103, 3104, 3105, and 3106 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

The following embodiments relate to a method for establishing a path performed by the first network element 1031. The method includes the following.

At step 3201, first information is received.

For implementations of step 3201, reference may be made to step 2106 of FIG. 2A, step 2206 of FIG. 2B, step 3101, and other related parts of the embodiments related to FIG. 2A, FIG. 2B, and step 3101, which are not repeated here.

In some embodiments, the first network element 1031 receives the first information sent by the second network element 1032. But the disclosure is not limited thereto. The first network element 1031 may also receive first information sent by other entities.

In some embodiments, the first network element 1031 obtains first information defined by a protocol.

In some embodiments, the first network element 1031 performs processing to obtain the first information.

In some embodiments, the step 3201 is omitted. The first network element 1031 autonomously implements the function indicated by the first information, and the function is default or preset.

At step 3202, one or more fourth network elements are determined.

For implementations of step 3202, reference may be made to step 2107 of FIG. 2A, step 2207 of FIG. 2B, step 3102, and other related parts of the embodiments related to FIG. 2A, FIG. 2B, and step 3102, which are not repeated here.

In some embodiments, the first network element 1031 determines one or more fourth network elements based on the first information. But the disclosure is not limited thereto. The first network element 1031 may also determine one or more fourth network elements based on other information.

In some embodiments, the step 3202 is omitted, and the function is default or preset.

At step 3203, one or more N4 sessions with the one or more fourth network elements is established or modified.

For implementations of step 3203, reference may be made to step 2108 of FIG. 2A, step 2208 of FIG. 2B, step 3103, and other related parts of the embodiments related to FIG. 2A, FIG. 2B, and step 3103, which are not repeated here.

In some embodiments, the first network element 1031 establishes one or more N4 sessions with the one or more fourth network elements.

In some embodiments, the first network element 1031 modifies one or more N4 sessions with the one or more fourth network elements.

In some embodiments, the step 3203 is omitted, and the function is default or preset.

At step 3204, second information is sent.

For implementations of step 3204, reference may be made to step 2109 of FIG. 2A, step 2209 of FIG. 2B, step 3104, and other related parts of the embodiments related to FIG. 2A, FIG. 2B, and step 3104, which are not repeated here.

In some embodiments, the first network element 1031 sends the second information to the second network element 1032. But the disclosure is not limited thereto. The first network element 1031 may also send second information to other entities.

In some embodiments, the step 3204 is omitted, and the function is default or preset.

For a detailed introduction to steps 3201-3204, reference may be made to the description of the above embodiments.

The method for establishing a path according to this embodiment of the disclosure may include at least one of steps 3201 to 3204. For example, the step 3201 may be implemented as an independent embodiment, and the step 3202 may be implemented as an independent embodiment, which are not limited in the disclosure.

In some embodiments, steps 3202, 3203, and 3204 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

FIG. 3A is a schematic flowchart illustrating a method for establishing a path according to an embodiment of the disclosure. As illustrated in FIG. 3A, this embodiment of the disclosure relates to a method for establishing a path performed by the first network element 1031. The method includes the following.

At step 3301, first information is received.

For implementations of step 3301, reference may be made to step 2106 of FIG. 2A, step 2206 of FIG. 2B, step 3101, step 3201, and other related parts of the embodiments related to FIG. 2A, FIG. 2B, step 3101, and step 3201, which are not repeated here.

In some embodiments, the first network element 1031 receives the first information sent by the second network element 1032. But the disclosure is not limited thereto. The first network element 1031 may also receive first information sent by other entities.

In some embodiments, the first network element 1031 obtains first information defined by a protocol.

In some embodiments, the first network element 1031 performs processing to obtain the first information.

For example, in some embodiments, the first network element 1031 receives the first information sent by the second network element. The first information is used for establishing a user plane path between an access network device and a third network element. The user plane path is used for sending and/or receiving first data related to a first service, to establish the user plane path by establishing or modifying a PDU session between a terminal and a data network where the third network element is located.

For example, in some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device, where the access network device is the access network device that the user plane path needs to connect to.

For example, in some embodiments, the access network device provides a service to the terminal, or the access network device provides no service to the terminal.

For example, in some embodiments, the establishment mode of establishing the user plane path through the PDU session between the terminal and the data network where the third network element is located is determined by any one of the first network element, the second network element, or the third network element. When the establishment mode is determined by the second network element or the third network element, the indication information is also used for indicating establishing the user plane path by establishing or modifying the PDU session between the terminal and the data network where the third network element is located.

For example, in some embodiments, the first information is carried by a first message, and the first message is used for requesting establishment or modification of a PDU session context.

For example, in some embodiments, the first network element 1031 determines one or more fourth network elements based on the first information.

For example, in some embodiments, the first network element 1031 establishes or modifies one or more N4 sessions with the one or more fourth network elements.

For example, in some embodiments, the first network element 1031 sends the second information to the access network device via the second network element. The first network element 1031 receives third information sent by the access network device via the second network element.

For example, in some embodiments, the second information includes at least one of: core network tunnel information of the one or more fourth network elements selected by the first network element; a requested QoS flow; a requested QoS flow related QoS parameter; or user plane information of the third network element.

For example, in some embodiments, the third information includes at least one of: capability information of the access network device; access network tunnel information of the access network device; access network tunnel information for a terminal related QoS flow; or access network tunnel information for a terminal unrelated QoS flow.

For example, in some embodiments, the first network element 1031 sends fourth information to the one or more fourth network elements.

For example, in some embodiments, the fourth information includes at least one of: access network tunnel information; or a forwarding rule used for indicating a rule for the fourth network element to forward the first data.

For example, in some embodiments, the forwarding rule includes at least one of: a first rule for indicating forwarding the first data associated with a QFI; or a second rule indicating forwarding the first data based on a destination address of the first data.

For example, in some embodiments, the forwarding rule is a first rule, where the first rule indicates forwarding the first data associated with the QFI. The access network device is not aware of the user plane information of the third network element and/or the data packet generated by the access network device includes no destination address of the first data encapsulated using the user plane information of the third network element.

For example, in some embodiments, the forwarding rule is a second rule, where the second rule indicates forwarding the first data based on the destination address of the first data. The access network device is aware of the user plane information of the third network element, and the data packet generated by the access network device includes a destination address of the first data encapsulated using the user plane information of the third network element.

For a detailed introduction to step 3301, reference may be made to the description of above embodiments.

The following embodiments relate to a method for establishing a path performed by the terminal 101. The method includes the following.

At step 4101, fifth information is obtained.

For implementations of step 4101, reference may be made to step 2103 of FIG. 2A and other related parts of the embodiment related to FIG. 2A, which are not repeated here.

In some embodiments, the terminal 101 receives the fifth information sent by the second network element 1032. But the disclosure is not limited thereto. The terminal 101 may also receive fifth information sent by other entities.

In some embodiments, the terminal 101 obtains fifth information defined by a protocol.

In some embodiments, the terminal 101 performs processing to obtain the fifth information.

In some embodiments, the terminal 101 obtains the fifth information from a higher layer.

In some embodiments, the step 4101 is omitted. The terminal 101 autonomously implements the function indicated by the fifth information, and the function being default or preset.

At step 4102, it is determined an absence of the PDU session, and a PDU session is established based on the fifth information.

For implementations of step 4102, reference may be made to step 2104 of FIG. 2A and other related parts of the embodiment related to FIG. 2A, which are not repeated here.

In some embodiments, the terminal 101 determines an absence of the PDU session and establishes a PDU session based on the fifth information. But the disclosure is not limited thereto. The terminal 101 may also establish a PDU session based on other information.

In some embodiments, the data network where the third network element is located, to which the PDU session connects, is identified by the DNN and/or the S-NSSAI.

In some embodiments, the step 4102 is omitted, and the function is default or preset.

At step 4103, sixth information is sent.

For implementations of step 4103, reference may be made to step 2105 of FIG. 2A and other related parts of the embodiment related to FIG. 2A, which are not repeated here.

In some embodiments, the terminal 101 sends the sixth information to the second network element 1032. But the disclosure is not limited thereto. The terminal 101 may also send sixth information to other entities.

In some embodiments, the sixth information is used in establishing a PDU session.

In some embodiments, the step 4103 is omitted, and the function is default or preset.

For a detailed introduction to steps 4101-4103, reference may be made to the content of above embodiments.

The method for establishing a path according to this embodiment of the disclosure may include at least one of steps 4101 to 4103. For example, the step 4101 may be implemented as an independent embodiment, the step 4102 may be implemented as an independent embodiment, the steps 4101 and step 4102 may be implemented as an independent embodiment, which are not limited thereto.

In some embodiments, steps 4102 and 4203 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

The following embodiments relate to a method for establishing a path performed by the terminal 101. The method includes the following.

At step 4201, fifth information is obtained.

For implementations of step 4201, reference may be made to step 2203 of FIG. 2B and other related parts of the embodiment related to FIG. 2B, which are not repeated here.

In some embodiments, the terminal 101 receives the fifth information sent by the second network element 1032. But the disclosure is not limited thereto. The terminal 101 may also receive fifth information sent by other entities.

In some embodiments, the terminal 101 obtains fifth information defined by a protocol.

In some embodiments, the terminal 101 performs processing to obtain the fifth information.

In some embodiments, the terminal 101 obtains the fifth information from a higher layer.

In some embodiments, the step 4201 is omitted. The terminal 101 autonomously implements the function indicated by the fifth information, and the function is default or preset.

At step 4202, it is determined that there is a PDU session and/or that the user plane path between the access network device and the third network element in the PDU session is unavailable, and the PDU session is modified based on the fifth information.

For implementations of step 4202, reference may be made to step 2104 of FIG. 2B and other related parts of the embodiment related to FIG. 2B, which are not repeated here.

In some embodiments, the terminal 101 determines a presence of the PDU session and/or the user plane path between the access network device and the third network element in the PDU session is unavailable, and the terminal 101 modifies the PDU session based on the fifth information. But the disclosure is not limited thereto. For example, the terminal 101 may also modify the PDU session based on other information.

In some embodiments, the data network where the third network element is located, to which the PDU session connects, is identified by the DNN and/or the S-NSSAI.

In some embodiments, the step 4202 is omitted, and the function is default or preset.

At step 4203, sixth information is sent.

For implementations of step 4203, reference may be made to step 2205 of FIG. 2B and other related parts of the embodiment related to FIG. 2B, which are not repeated here.

In some embodiments, the terminal 101 sends the sixth information to the second network element 1032. But the disclosure is not limited thereto. The terminal 101 may also send sixth information to other entities.

In some embodiments, the sixth information is used in modifying a PDU session.

In some embodiments, the step 4203 is omitted, and the function is default or preset.

For a detailed introduction to steps 4201-4203, reference may be made to the content of above embodiments.

The method for establishing a path according to this embodiment of the disclosure may include at least one of steps 4201 to 4203. For example, the step 4201 may be implemented as an independent embodiment, the step 4202 may be implemented as an independent embodiment, the steps 4201 and step 4202 may be implemented as an independent embodiment, which is not limited thereto.

In some embodiments, steps 4202 and 4203 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

FIG. 4A is a schematic flowchart illustrating a method for establishing a path according to an embodiment of the disclosure. As illustrated in FIG. 4A, this embodiment of the disclosure relates to a method for establishing a path performed by the terminal 101. The method includes the following.

At step 4301, fifth information is obtained.

For implementations of step 4201, reference may be made to step 2103 of FIG. 2A, step 2203 of FIG. 2B, step 4101, step 4201, and other related parts of the embodiments related to FIG. 2A, FIG. 2B, step 4101, and step 4201, which are not repeated here.

In some embodiments, the terminal 101 receives the fifth information sent by the second network element 1032. But the disclosure is not limited thereto. The terminal 101 may also receive fifth information sent by other entities.

In some embodiments, the terminal 101 obtains fifth information defined by a protocol.

In some embodiments, the terminal 101 performs processing to obtain the fifth information.

In some embodiments, the terminal 101 obtains the fifth information from a higher layer.

For example, in some embodiments, the terminal 101 obtains fifth information, where the fifth information is used in establishing a user plane path between an access network device and a third network element, the user plane path is used for transmitting first data related to a first service, and the user plane path is established by establishing or modifying a PDU session between the terminal and a data network where the third network element is located.

For example, in some embodiments, the fifth information includes at least one of: indication information used for indicating establishing the user plane path; user plane information of the third network element; a data network name (DNN) of the data network where the third network element is located; or single network slice selection assistance information (S-NSSAI) of the data network where the third network element is located.

For example, in some embodiments, the terminal 101 determines an absence of the PDU session and establishes the PDU session based on the fifth information. The data network where the third network element is located and to which the PDU session connects is identified by the DNN and/or the S-NSSAI.

For example, in some embodiments, the terminal 101 determines a presence of the PDU session, and/or that the user plane path between the access network device and the third network element in the PDU session is unavailable, and the terminal 101 modifies the PDU session based on the fifth information to add to the PDU session the user plane path between the access network device and the third network element, the data network where the third network element is located and to which the PDU session connects being identified by the DNN and/or the S-NSSAI.

For example, in some embodiments, the DNN and/or the S-NSSAI are obtained from the second network element, obtained from the third network element, or obtained locally from the terminal.

For example, in some embodiments, the terminal 101 sends sixth information to the second network element, where the sixth information is used for establishing or modifying the PDU session.

For example, in some embodiments, the sixth information includes at least one of: indication information used for indicating establishing the user plane path; user plane information of the third network element; a data network name (DNN) of the data network where the third network element is located; single network slice selection assistance information (S-NSSAI) of the data network where the third network element is located; location information of the terminal; or information of the access network device, where the access network device is the access network device that the user plane path needs to connect to.

The following embodiments relate to a method for establishing a path performed by the second network element 1032. The method includes the following.

At step 5101, eighth information is received.

For implementations of step 5101, reference may be made to step 2102 of FIG. 2A, step 2202 of FIG. 2B, and other related parts of the embodiments related to FIG. 2A and FIG. 2B, which are not repeated here.

In some embodiments, the second network element 1032 receives the eighth information sent by the third network element 1033. But the disclosure is not limited thereto. The second network element 1032 may also receive eighth information sent by other entities.

In some embodiments, the second network element 1032 obtains eighth information defined by a protocol.

In some embodiments, the second network element 1032 performs processing to obtain the eighth information.

In some embodiments, the step 5101 is omitted. The second network element 1032 autonomously implements the function indicated by the eighth information, and the function is default or preset.

At step 5102, fifth information is sent.

For implementations of step 5102, reference may be made to step 2103 of FIG. 2A, step 2203 of FIG. 2B, and other related parts of the embodiments related to FIG. 2A and FIG. 2B, which are not repeated here.

In some embodiments, the second network element 1032 sends the fifth information to the terminal 101. But the disclosure is not limited thereto. The second network element 1032 may also send fifth information to other entities.

In some embodiments, the step 5102 is omitted, and the function is default or preset.

At step 5103, sixth information is received.

For implementations of step 5103, reference may be made to step 2105 of FIG. 2A, step 2205 of FIG. 2B, and other related parts of the embodiments related to FIG. 2A and FIG. 2B, which are not repeated here.

In some embodiments, the second network element 1032 receives the sixth information sent by the terminal 101. But the disclosure is not limited thereto. The second network element 1032 may also receive sixth information sent by other entities.

In some embodiments, the second network element 1032 obtains sixth information defined by a protocol.

In some embodiments, the second network element 1032 performs processing to obtain the sixth information.

In some embodiments, the step 5103 is omitted. The second network element 1032 autonomously implements the function indicated by the sixth information, and the function is default or preset.

At step 5104, first information is sent.

For implementations of step 5104, reference may be made to step 2106 of FIG. 2A, step 2206 of FIG. 2B, and other related parts of the embodiments related to FIG. 2A and FIG. 2B, which are not repeated here.

In some embodiments, the second network element 1032 sends the first information to the first network element 1031. But the disclosure is not limited thereto. The second network element 1032 may also send first information to other entities.

In some embodiments, the step 5104 is omitted, and the function is default or preset.

At step 5105, second information is received.

For implementations of step 5105, reference may be made to step 2109 of FIG. 2A, step 2209 of FIG. 2B, and other related parts of the embodiments related to FIG. 2A and FIG. 2B, which are not repeated here.

In some embodiments, the second network element 1032 receives the second information sent by the first network element 1031. But the disclosure is not limited thereto. The second network element 1032 may also receive second information sent by other entities.

In some embodiments, the second network element 1032 obtains second information defined by a protocol.

In some embodiments, the second network element 1032 performs processing to obtain the second information.

In some embodiments, the step 5105 is omitted. The second network element 1032 autonomously implements the function indicated by the second information, and the function is default or preset.

At step 5106, ninth information is sent.

For implementations of step 5106, reference may be made to step 2110 of FIG. 2A, step 2210 of FIG. 2B, and other related parts of the embodiments related to FIG. 2A and FIG. 2B, which are not repeated here.

In some embodiments, the second network element 1032 sends the ninth information to the access network device 102. But the disclosure is not limited thereto. The second network element 1032 may also send ninth information to other entities.

In some embodiments, the step 5106 is omitted, and the function is default or preset.

At step 5107, tenth information is received.

For implementations of step 5107, reference may be made to step 2112 of FIG. 2A, step 2212 of FIG. 2B, and other related parts of the embodiments related to FIG. 2A and FIG. 2B, which are not repeated here.

In some embodiments, the second network element 1032 receives the tenth information sent by the access network device 102. But the disclosure is not limited thereto. The second network element 1032 may also receive tenth information sent by other entities.

In some embodiments, the second network element 1032 obtains tenth information defined by a protocol.

In some embodiments, the second network element 1032 performs processing to obtain the tenth information.

In some embodiments, the step 5107 is omitted. The second network element 1032 autonomously implements the function indicated by the tenth information, and function is default or preset.

At step 5108, third information is sent.

For implementations of step 5108, reference may be made to step 2113 of FIG. 2A, step 2213 of FIG. 2B, and other related parts of the embodiments related to FIG. 2A and FIG. 2b, which are not repeated here.

In some embodiments, the second network element 1032 sends the third information to the first network element 1031. But the disclosure is not limited thereto. The second network element 1032 also send third information to other entities.

In some embodiments, the step 5108 is omitted, and the function is default or preset.

For a detailed introduction to steps 5101-5108, reference may be made to the content of the above embodiments.

The method for establishing a path according to this embodiment of the disclosure may include at least one of steps 5101 to 5108. For example, the step 5101 may be implemented as an independent embodiment, the step 5102 may be implemented as an independent embodiment, the steps 5101 are step 5104 may be implemented as an independent embodiment, which are not limited thereto.

In some embodiments, steps 5102, 5103, 5104, 5105, 5106, 5107, and 5108 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

The following embodiments relate to a method for establishing a path performed by the second network element 1032. The method includes the following.

At step 5201, eighth information is received.

For implementations of step 5201, reference may be made to step 2102 of FIG. 2A, step 2202 of FIG. 2B, step 5101, and other related parts of the embodiments related to FIG. 2A, FIG. 2B, and step 5101, which are not repeated here.

In some embodiments, the second network element 1032 receives the eighth information sent by the third network element 1033. But the disclosure is not limited thereto. The second network element 1032 may also receive eighth information sent by other entities.

In some embodiments, the second network element 1032 obtains eighth information defined by a protocol.

In some embodiments, the second network element 1032 performs processing to obtain the eighth information.

In some embodiments, the step 5201 is omitted. The second network element 1032 autonomously implements the function indicated by the eighth information, and the function is default or preset.

At step 5202, first information is sent.

For implementations of step 5202, reference may be made to step 2106 of FIG. 2A, step 2206 of FIG. 2B, step 5104, and other related parts of the embodiments related to FIG. 2A, FIG. 2B, and step 5104, which are not limited here.

In some embodiments, the second network element 1032 sends the first information to the first network element 1031. But the disclosure is not limited thereto. The second network element 1032 may also send first information to other entities.

In some embodiments, the step 5202 is omitted, and the function is default or preset.

At step 5203, ninth information is sent.

For implementations of step 5203, reference may be made to step 2110 of FIG. 2A, step 2210 of FIG. 2B, step 5106, and other related parts of the embodiments related to FIG. 2A, FIG. 2B, and step 5106, which are not repeated here.

In some embodiments, the second network element 1032 sends the ninth information to the access network device 102. But the disclosure is not limited thereto. The second network element 1032 may also send ninth information to other entities.

In some embodiments, the step 5203 is omitted, and the function is default or preset.

At step 5204, tenth information is received.

For implementations of step 5204, reference may be made to step 2112 of FIG. 2A, step 2212 of FIG. 2B, step 5107, and other related parts of the embodiments related to FIG. 2A, FIG. 2B, and step 5107, which are not repeated here.

In some embodiments, the second network element 1032 receives the tenth information sent by the access network device 102. But the disclosure is not limited thereto. The second network element 1032 may also receive tenth information sent by other entities.

In some embodiments, the second network element 1032 obtains tenth information defined by a protocol.

In some embodiments, the second network element 1032 performs processing to obtain the tenth information.

In some embodiments, the step 5204 is omitted. The second network element 1032 autonomously implements the function indicated by the tenth information, and the function is default or preset.

For a detailed introduction to steps 5201-5204, reference may be made to the content of the above embodiments.

The method for establishing a path according to this embodiment of the disclosure may include at least one of steps 5201 to 5204. For example, the step 5201 may be implemented as an independent embodiment, the step 5202 may be implemented as an independent embodiment, the steps 5201 and 5202 may be implemented as an independent embodiment, which are not limited thereto.

In some embodiments, steps 5203 and 5204 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

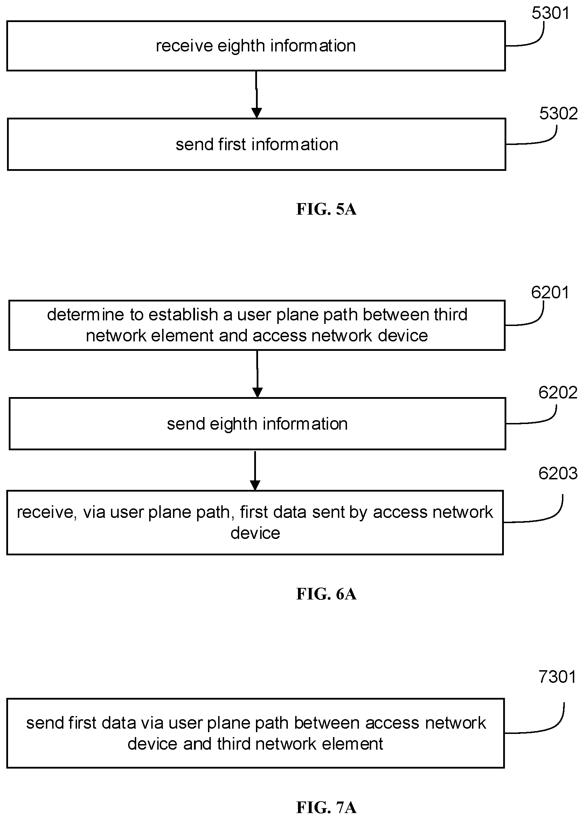

FIG. 5A is a schematic flowchart illustrating a method for establishing a path according to an embodiment of the disclosure. As illustrated in FIG. 5A, this embodiment of the disclosure relates to a method for establishing a path performed by the second network element 1032. The method includes the following.

At step 5301, eighth information is received.

For implementations of step 5301, reference may be made to step 2102 of FIG. 2A, step 2202 of FIG. 2B, step 5101, step 5201, and other related parts of the embodiments related to FIG. 2A, FIG. 2B, step 5101, and step 5201, which are not repeated here.

In some embodiments, the second network element 1032 receives the eighth information sent by the third network element 1033. But the disclosure is not limited thereto. The second network element 1032 may also receive eighth information sent by other entities.

In some embodiments, the second network element 1032 obtains eighth information defined by a protocol.

In some embodiments, the second network element 1032 performs processing to obtain the eighth information.

In some embodiments, the step 5301 is omitted. The second network element 1032 autonomously implements the function indicated by the eighth information, and the function is default or preset.

At step 5302, first information is sent.

For implementations of step 5302, reference may be made to step 2106 of FIG. 2A, step 2206 of FIG. 2B, step 5104, step 5202, and other related parts of the embodiments related to FIG. 2A, FIG. 2B, step 5104, and step 5202, which are not repeated here.

In some embodiments, the second network element 1032 sends the first information to the first network element 1031. But the disclosure is not limited thereto. The second network element 1032 may also send first information to other entities.

In some embodiments, the step 5302 is omitted, and the function is default or preset.

For example, in some embodiments, the second network element 1032 receives the eighth information sent by the third network element. The second network element 1032 sends the first information to the first network element. The eighth information and/or the first information is used for establishing a user plane path between an access network device and the third network element. The user plane path is used for sending and/or receiving first data related to a first service, to establish the user plane path by establishing or modifying a protocol data unit (PDU) session between a terminal and a data network where the third network element is located.

For example, in some embodiments, the eighth information includes at least one of: indication information used for indicating establishing the user plane path; user plane information of the third network element; information of the access network device; a data network name (DNN) of the data network where the third network element is located; or single network slice selection assistance information (S-NSSAI) of the data network where the third network element is located.

For example, in some embodiments, the first information includes at least one of: indication information used for indicating establishing the user plane path; user plane information of the third network element; location information of the terminal; a data network name (DNN) of the data network where the third network element is located; single network slice selection assistance information (S-NSSAI) of the data network where the third network element is located; or information of the access network device, where the access network device is the access network device that the user plane path needs to connect to.

For example, in some embodiments, the access network device provides a service the terminal, or the access network device provides no service to the terminal.

For example, in some embodiments, the establishment mode of establishing the user plane path by establishing or modifying the PDU session between the terminal and the data network where the third network element is located is determined by any one of the first network element, the second network element, or the third network element. When the establishment mode is determined by the second network element or the third network element, the indication information is also used for indicating establishing the user plane path by establishing or modifying the PDU session between the terminal and the data network where the third network element is located.

For example, in some embodiments, the first information is carried by a first message, and the first message is used for requesting establishment or modification of a PDU session context.

For example, in some embodiments, the second network element 1032 sends fifth information to the terminal. The fifth information includes at least one of: indication information used for indicating establishing the user plane path; user plane information of the third network element; a data network name (DNN) of the data network where the third network element is located; or single network slice selection assistance information (S-NSSAI) of the data network where the third network element is located.

For example, in some embodiments, in a third case, the fifth information is used in establishing a PDU session, where the third case is that the terminal determines an absence of the PDU session, and the data network where the third network element is located, to which the PDU session connects, is identified by the DNN and/or the S-NSSAI. In a fourth case, the fifth information is used in modifying a PDU session to add to the PDU session the user plane path between the access network device and the data network where the third network element is located, where the fourth case is that the terminal determines the presence of the PDU session, and/or the user plane path between the access network device and the third network element in the PDU session is unavailable, and the data network where the third network element is located, to which the PDU session connects, is identified by the DNN and/or the S-NSSAI.

For example, in some embodiments, the second network element 1032 receives second information sent by the first network element.

For example, in some embodiments, the second information includes at least one of: core network tunnel information of the one or more fourth network elements selected by the first network element; a requested QoS flow; a requested QoS flow related QoS parameter; or user plane information of the third network element.

For example, in some embodiments, the second network element 1032 sends ninth information to the access network device. The ninth information includes at least one of: core network tunnel information of the one or more fourth network elements selected by the first network element; a requested QoS flow; a requested QoS flow related QoS parameter; or user plane information of the third network element.

For example, in some embodiments, the second network element 1032 receives tenth information sent by the access network device. The tenth information includes at least one of: capability information of the access network device; access network tunnel information of the access network device; access network tunnel information for a terminal related QoS flow; or access network tunnel information for a terminal unrelated QoS flow.

For example, in some embodiments, the second network element 1032 sends third information to the first network element. The third information includes at least one of: capability information of the access network device; access network tunnel information of the access network device; access network tunnel information for a terminal related QoS flow; or access network tunnel information for a terminal unrelated QoS flow.

For a detailed introduction to steps 5301-5302, reference may be made to the description of the above embodiments.

The method for establishing a path according to this embodiment of the disclosure may include at least one of steps 5301 and 5302. For example, the step 5301 may be implemented as an independent embodiment, the step 5302 may be implemented as an independent embodiment, and the steps 5301 and 5302 may be implemented as an independent embodiment.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

The following embodiments relate to a method for establishing a path performed by the third network element 1033. The method includes the following.

At step 6101, it is determined that a user plane path between the third network element and an access network device is established.

For implementations of step 6101, reference may be made to step 2101 of FIG. 2A, step 2201 of FIG. 2B, and other related parts of the embodiments related to FIG. 2A and FIG. 2B, which are not repeated here.

In some embodiments, the third network element 1033 determines to establish a user plane path between the third network element and an access network device.

In some embodiments, the step 6101 is omitted, and the function is default or preset.

At step 6102, eighth information is sent.

For implementations of step 6101, reference may be made to step 2102 of FIG. 2A, step 2202 of FIG. 2B, and other related parts of the embodiments related to FIG. 2A and FIG. 2B, which are not repeated here.

In some embodiments, the third network element 1033 sends the eighth information to the second network element. But the disclosure is not limited thereto. The third network element 1033 may send the eighth information to other entities.

In some embodiments, the eighth information is used in establishing a user plane path.

In some embodiments, the step 6102 is omitted, and the function is default or preset.

At step 6103, eleventh information is sent to the access network device via the user plane path between the access network device and the third network element or via the control plane path between the access network device and the third network element.

For implementations of step 6103, reference may be made to step 2114 of FIG. 2A, step 2214 of FIG. 2B, and other related parts of the embodiments related to FIG. 2A and FIG. 2B, which are not repeated here.

In some embodiments, the third network element 1033 sends the eleventh information to the access network device via the user plane path or via the control plane path between the access network device and the third network element.

In some embodiments, the eleventh information is used for requesting first data.

In some embodiments, the step 6103 is omitted and the function is default or preset.

At step 6104, first data is received via the user plane path.

For implementations of step 6104, reference may be made to step 2117 of FIG. 2A, step 2217 of FIG. 2B, and other related parts of the embodiments related to FIG. 2A and FIG. 2B, which are not repeated here.

In some embodiments, the third network element 1033 receives the first data sent by the access network device via the user plane path. But the disclosure is not limited thereto. The third network element 1033 may also receive first data sent by other entities via the user plane path.

In some embodiments, the first data is related to a first service.

In some embodiments, the step 6104 is omitted and the function is default or preset.

For a detailed introduction to steps 6101-6104, reference may be made to the content of the above embodiments.

The method for establishing a path according to this embodiment of the disclosure may include at least one of steps 6101 to 6104. For example, the step 6101 may be implemented as an independent embodiment, the step 6102 may be implemented as an independent embodiment, the steps 6101, 6102, and 6104 may be implemented as an independent embodiment, which are not limited thereto.

In some embodiments, the step 6103 is optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

FIG. 6A is a schematic flowchart illustrating a method for establishing a path according to an embodiment of the disclosure. As illustrated in FIG. 6A, this embodiment of the disclosure relates to a method for establishing a path performed by the third network element 1033. The method includes the following.

At step 6201, it is determined to establish a user plane path between the third network element and an access network device.

For implementations of step 6201, reference may be made to step 2101 of FIG. 2A, step 2201 of FIG. 2B, step 6101, and other related parts of embodiments related to FIG. 2A, FIG. 2B, and step 6101, which are not repeated here.

In some embodiments, the third network element 1033 determines to establish a user plane path between the third network element and an access network device.

In some embodiments, the step 6201 is omitted, the function is default or preset.

At step 6202, eighth information is sent.

For implementations of step 6202, reference may be made to step 2102 of FIG. 2A, step 2202 of FIG. 2B, step 6102, and other related parts of the embodiments related to FIG. 2A, FIG. 2B, and step 6102, which are not repeated here.

In some embodiments, the third network element 1033 sends the eighth information to the second network element. But the disclosure is not limited thereto. The third network element 1033 may send the eighth information to other entities.

In some embodiments, the eighth information is used in establishing a user plane path.

In some embodiments, the step 6202 is omitted, and the function is default or preset.

At step 6203, first data is received via the user plane path.

For implementations of step 6203, reference may be made to step 2117 of FIG. 2A, step 2217 of FIG. 2B, step 6104, and other related parts of the embodiments related to FIG. 2A, FIG. 2B, and step 6104, which are not repeated here.

In some embodiments, the third network element 1033 receives the first data sent by the access network device via the user plane path. But the disclosure is not limited thereto. The third network element 1033 may also receive first data sent by other entities via the user plane path.

In some embodiments, the first data is related to a first service.

In some embodiments, the step 6203 is omitted, and the function is default or preset.

For example, in some embodiments, the third network element 1033 determines to establish a user plane path between the third network element and an access network device. The third network element 1033 sends eighth information to a second network element. The eighth information is used in establishing the user plane path. The third network element 1033 receives, via the user plane path, first data sent by the access network device, the first data being related to a first service.

For example, in some embodiments, the eighth information includes at least one of: indication information used for indicating establishing the user plane path; user plane information of the third network element; information of the access network device; a data network name (DNN) of the data network where the third network element is located; or single network slice selection assistance information (S-NSSAI) of the data network where the third network element is located.

For example, in some embodiments, the third network element 1033 sends eleventh information to the access network device via the user plane path or via a control plane path between the access network device and the third network element, and the eleventh information is used for requesting the first data.

For example, in some embodiments, the eleventh information includes at least one of: first data request information; indication information used for indicating establishing the user plane path; user plane information of the third network element; or identifier information of the user plane path.

For a detailed introduction to steps 6201-6203, reference may be made to the description of the above embodiments.

The method for establishing a path according to this embodiment of the disclosure may include at least one of steps 6201 to 6203. For example, the step 6201 may be implemented as an independent embodiment, the step 6202 may be implemented as an independent embodiment, the steps 6201, 6202, and 6203 may be implemented as an independent embodiment, which is not limited thereto.

In this implementation or embodiment, in the absence of conflict, each step may be independent, arbitrarily combined, or have its order exchanged. Optional modes or examples may be arbitrarily combined, and may be arbitrarily combined with any steps of other implementations or embodiments.

The following embodiments relate to a method for establishing a path performed by the access network device 102. The method includes the following.

At step 7101, ninth information is received.

For implementations of step 7101, reference may be made to step 2110 of FIG. 2A, step 2210 of FIG. 2B, and other related parts of the embodiments related to FIG. 2A and FIG. 2B, which are not repeated here.

In some embodiments, the access network device 102 may receive the ninth information sent by the second network element. Bu the disclosure is not limited thereto. The access network device 102 may also receive ninth information sent by other entities.

In some embodiments, the access network device 102 obtains ninth information defined by a protocol.

In some embodiments, the access network device 102 performs processing to obtain the ninth information.

In some embodiments, the access network device 102 obtains the ninth information from a higher layer.

In some embodiments, the step 7101 is omitted. The access network device 102 autonomously implements the function indicated by the ninth information, and the function is default or preset.

At step 7102, a user plane path connecting the access network device and the third network element is established.

For implementations of step 7102, reference may be made to step 2111 of FIG. 2A, step 2211 of FIG. 2B, and other related parts of the embodiments related to FIG. 2A and FIG. 2B, which are not repeated here.

In some embodiments, the access network device 102 establishes a user plane path for connecting the access network device and the third network element. In other words, in addition to the PDU session establishment behavior, the access network device 102 may also establish a user plane path connecting the access network device and the third network element based on the ninth information. The establishment of the user plane path may be achieved through a special QoS flow, which corresponds to the user plane path between the access network device and the third network element.

In some embodiments, the access network device 102 may establish a QoS flow for the user plane path connecting the access network device and the third network element based on the ninth information. But the disclosure is not limited thereto. The access network device 102 may also establish a QoS flow for the user plane path based on other information.

In some embodiments, the step 7102 is omitted, and the function is default or preset.

At step 7103, tenth information is sent.

For implementations of step 7103, reference may be made to step 2112 of FIG. 2A, step 2212 of FIG. 2B, and other related parts of the embodiments related to FIG. 2A and FIG. 2B, which are not repeated here.

In some embodiments, the access network device 102 sends the tenth information to the second network element. But the disclosure is not limited thereto. The access network device 102 may also send tenth information to other devices.

In some embodiments, the step 7103 is omitted, and the function is default or preset.

At step 7104, eleventh information is received via the user plane path or via the control plane path between the access network device and the third network element.

For implementations of step 7104, reference may be made to step 2115 of FIG. 2A, step 2215 of FIG. 2B, and other related parts of the embodiments related to FIG. 2A and FIG. 2B, which are not repeated here.

In some embodiments, the access network device 102 receives the eleventh information sent by the third network element via the user plane path or via the control plane path between the access network device and the third network element. But the disclosure is not limited thereto. The access network device 102 may also receive eleventh information sent by other entities.

In some embodiments, the eleventh information is used for requesting first data.

In some embodiments, the step 7104 is omitted. The access network device 102 autonomously implements the function indicated by the eleventh information, and the function is default or preset.

At step 7105, first data is determined.

For implementations of step 7105, reference may be made to step 2116 of FIG. 2A, step 2216 of FIG. 2B, and other related parts of the embodiments related to FIG. 2A and FIG. 2B, which are not repeated here.

In some embodiments, the access network device 102 determines service data of the first service, and packages the service data of the first service into a service data packet based on capability information of the access network device, as the first data. The service data packet includes a destination address of the service data packet encapsulated using the user plane information of the third network element, or the service data packet includes no destination address of the service data packet encapsulated using the user plane information of the third network element.

In some embodiments, the step 7105 is omitted, and the function is default or preset.

At step 7106, first data is sent via the user plane path between the access network device and the third network element.

For implementations of step 7106, reference may be made to step 2117 of FIG. 2A, step 2217 of FIG. 2B, and other related parts of the embodiments related to FIG. 2A and FIG. 2B, which are not repeated here.

In some embodiments, the access network device 102 sends the first data to the third network element via the user plane path between the access network device and the third network element. But the disclosure is not limited thereto. The access network device 102 may also send first data to other entities.

In some embodiments, the first data is related to a first service.

In some embodiments, the step 7106 is omitted, and the function is default or preset.

For a detailed introduction to steps 7101-7106, reference may be made to the content of the above embodiments.

The method for establishing a path according to this embodiment of the disclosure may include at least one of steps 7101 to 7106. For example, the step 7101 may be implemented as an independent embodiment, the step 7102 may be implemented as an independent embodiment, the steps 7104, 7105, and 7106 may be implemented as an independent embodiment, which are not limited thereto.

In some embodiments, steps 7101, 7102, 7103, 7104, and 7105 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

The following embodiments relate to a method for establishing a path performed by the access network device 102. The method includes the following.

At step 7201, eleventh information is received via the user plane path connecting the access network device and the third network element or via the control plane path between the access network device and the third network element.

For implementations of step 7201, reference may be made to step 2115 of FIG. 2A, step 2215 of FIG. 2B, step 7104, and other related parts of the embodiments related to FIG. 2A, FIG. 2b, and step 7104, which are not repeated here.

In some embodiments, the access network device 102 receives the eleventh information sent by the third network element via the user plane path or via the control plane path between the access network device and the third network element. But the disclosure is not limited thereto. The access network device 102 may also receive eleventh information sent by other entities.

In some embodiments, the eleventh information is used for requesting first data.

In some embodiments, the step 7201 is omitted. The access network device 102 autonomously implements the function indicated by the eleventh information, and function is default or preset.

At step 7202, first data is determined.

For implementations of step 7202, reference may be made to step 2116 of FIG. 2A, step 2216 of FIG. 2B, step 7105, and other related parts of the embodiments related to FIG. 2A, FIG. 2B, and step 7105, which are not repeated here.

In some embodiments, the access network device 102 determines service data of the first service, and packages the service data of the first service into a service data packet based on capability information of the access network device, as the first data. The service data packet includes a destination address of the service data packet encapsulated using the user plane information of the third network element, or the service data packet includes no destination address of the service data packet encapsulated using the user plane information of the third network element.

In some embodiments, the step 7202 is omitted, and the function is default or preset.

At step 7203, first data is sent via the user plane path between the access network device and the third network element.

For implementations of step 7203, reference may be made to step 2117 of FIG. 2A, step 2217 of FIG. 2B, step 7106, and other related parts of the embodiments related to FIG. 2A, FIG. 2B, and step 7106, which are not repeated here.

In some embodiments, the access network device 102 sends the first data to the third network element via the user plane path between the access network device and the third network element. But the disclosure is not limited thereto. The access network device 102 may also send first data to other entities.

In some embodiments, the first data is related to a first service.

In some embodiments, the step 7203 is omitted, and the function is default or preset.

For a detailed introduction to steps 7201-7203, reference may be made to the content of above embodiments.

The method for establishing a path according to this embodiment of the disclosure may include at least one of steps 7201 to 7203. For example, the step 7201 may be implemented as an independent embodiment, the step 7202 may be implemented as an independent embodiment, the steps 7201, 7202, and 7203 may be implemented as an independent embodiment, which are not limited thereto.

In some embodiments, steps 7201 and 7202 are optional and may be omitted or replaced in different embodiments.

In this implementation or embodiment, in the absence of conflict, each step may be independent, arbitrarily combined, or have its order exchanged. Implementations or examples may be arbitrarily combined, and may be arbitrarily combined with any steps of other implementations or embodiments.

FIG. 7A is a schematic flowchart illustrating a method for establishing a path according to an embodiment of the disclosure. As illustrated in FIG. 7A, this embodiment of the disclosure relates to a method for establishing a path performed by the access network device 102. The method includes the following.

At step 7301, first data is sent via the user plane path between the access network device and the third network element.

For implementations of step 7301, reference may be made to step 2117 of FIG. 2A, step 2217 of FIG. 2B, step 7106, step 7203, and other related parts of the embodiments related to FIG. 2A, FIG. 2B, step 7106, and step 7203, which are not repeated here.

In some embodiments, the access network device 102 sends the first data to the third network element via the user plane path between the access network device and the third network element. But the disclosure is not limited thereto. The access network device 102 may also send first data to other entities.

In some embodiments, the first data is related to a first service.

For example, in some embodiments, the access network device 102 sends, via a user plane path between the access network device and a third network element, first data to the third network element, where the first data is related to a first service, and the user plane path is established by establishing or modifying a protocol data unit (PDU) session between a terminal and a data network where the third network element is located.

For example, in some embodiments, the access network device 102 receives ninth information sent by a second network element, where the ninth information includes at least one of: core network tunnel information of one or more fourth network elements selected by a first network element; a requested QoS flow; a requested QoS flow related QoS parameter; or user plane information of the third network element.

For example, in some embodiments, the access network device 102 establishes a QoS flow for the user plane path.

For example, in some embodiments, the access network device 102 sends tenth information to the second network element, where the tenth information includes at least one of: capability information of the access network device; access network tunnel information of the access network device; access network tunnel information for a terminal related QoS flow; access network tunnel information for a terminal unrelated QoS flow.

For example, in some embodiments, the access network device 102 receives eleventh information sent by the third network element via the user plane path or via a control plane path between the access network device and the third network element, where the eleventh information is used for requesting the first data.

For example, in some embodiments, the eleventh information includes at least one of the following: first data request information; indication information used for indicating establishing the user plane path; user plane information of the third network element; or identifier information of the user plane path.

For example, in some embodiments, the access network device 102 determines service data of the first service, and packages the service data of the first service into a service data packet based on capability information of the access network device, as the first data. The service data packet includes a destination address of the service data packet encapsulated using the user plane information of the third network element, or the service data packet includes no destination address of the service data packet encapsulated using the user plane information of the third network element.

For a detailed introduction to step 7301, reference may be made to the description of above embodiments.

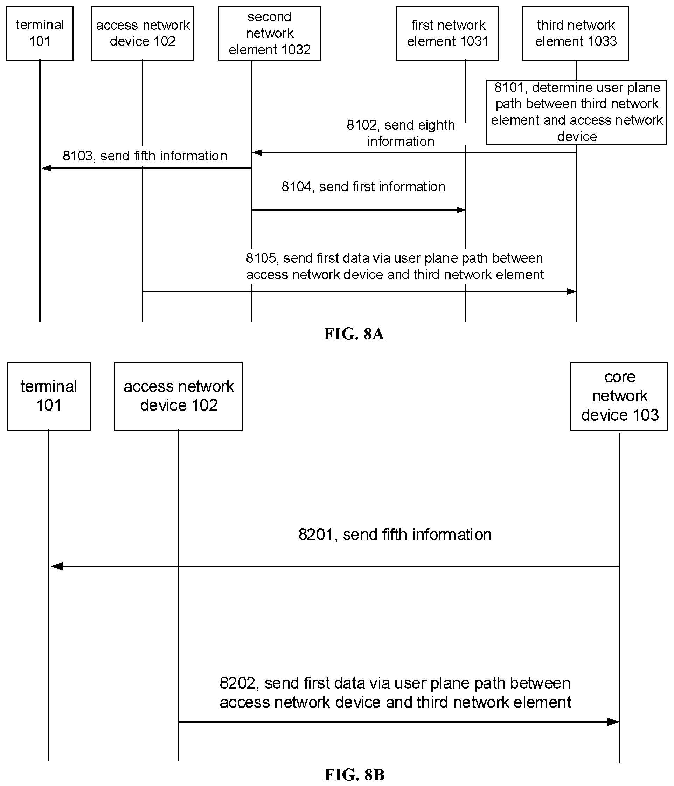

FIG. 8A is an interaction diagram illustrating a method for establishing a path according to an embodiment of the disclosure. As illustrated in FIG. 8A, this embodiment of the disclosure relates to a method for establishing a path. The method includes the following.

At step 8101, a third network element 1033 determines to establish a user plane path between the third network element 1033 and an access network device 102.

For implementations of step 8101, reference may be made to step 2101 of FIG. 2A, step 2201 of FIG. 2B, step 6101, step 6201, and other related parts of the embodiments related to FIG. 2A, FIG. 2B, step 6101, and step 6201, which are not repeated here.

At step 8102, the third network element 1033 sends eighth information to a second network element 1032.

For implementations of step 8102, reference may be made to step 2102 of FIG. 2A, step 2202 of FIG. 2B, step 5101, step 5201, step 5301, step 6102, step 6202, and other related parts of the embodiments related to FIG. 2A, FIG. 2B, step 5101, step 5201, step 5301, step 6102, and step 6202, which are not repeated here.

At step 8103, the second network element 1032 sends fifth information to a terminal 101.

For implementations of step 8103, reference may be made to step 2103 of FIG. 2A, step 2203 of FIG. 2B, step 4101, step 4201, step 4301, step 5102, and other related parts of the embodiments related to FIG. 2A, FIG. 2B, step 4101, step 4201, step 4301, and step 5102, which are not repeated here.

At step 8104, the second network element 1032 sends first information to a first network element 1031.

For implementations of step 8104, reference may be made to step 2106 of FIG. 2A, step 2206 of FIG. 2B, step 3101, step 3201, step 3301, step 5104, step 5202, step 5302, and other related parts of the embodiments related to FIG. 2A, FIG. 2B, step 3101, step 3201, step 3301, step 5104, step 5202, and step 5302, which are not repeated here.

At step 8105, the access network device 102 sends first data to the third network element 1033 via the user plane path between the access network device 102 and the third network element 1033.

For optional of step 8105, reference may be made to step 2117 of FIG. 2A, step 2217 of FIG. 2B, step 6104, step 6203, step 7106, step 7203, step 7301, and other related parts of the embodiments related to FIG. 2A, FIG. 2B, step 6104, step 6203, step 7106, step 7203, and step 7301, which are not repeated here.

For implementations of steps 8101-8105, reference may be made to the introduction of the above embodiments.

In some embodiments, the above methods may include methods described in the embodiments on the communication system side, terminal side, core network device side, access network device side, first network element side, second network element side, third network element side, etc., which are not repeated here.

FIG. 8B is a schematic diagram illustrating an interaction of a method for establishing a path according to an embodiment of the disclosure. As illustrated in FIG. 8B, this embodiment of the disclosure relates to a method for establishing a path. A core network device 103 includes a first network element 1031, a second network element 1032, and a third network element 1033. The method includes at least one of the following.

At step 8201, the core network device 103 sends fifth information to a terminal 101.

For implementations of step 8201, reference may be made to step 2103 of FIG. 2A, step 2203 of FIG. 2B, step 4101, step 4201, step 4301, step 5102, and other related parts of the embodiments related to FIG. 2A, FIG. 2B, step 4101, step 4201, step 4301, and step 5102, which are not repeated here.

At step 8202, the access network device 102 sends first data to the core network device 103 via the user plane path between the access network device 102 and the core network device 103.

For implementations of step 8202, reference may be made to step 2117 of FIG. 2A, step 2217 of FIG. 2B, step 6104, step 6203, step 7106, step 7203, step 7301, and other related parts of the embodiments related to FIG. 2A, FIG. 2B, step 6104, step 6203, step 7106, step 7203, and step 7301, which are not repeated here.

For implementations of steps 8201 and 8202, reference may be made to the introduction of the above embodiments.

In some embodiments, the above methods may include the methods according to the embodiments on the core network device side, first network element side, second network element side, third network element side, etc., which are not repeated here.

The following is an exemplary introduction to the above methods.

In the following embodiments, taking a positioning service as an example, the service NF is an LMF. This method is also applicable to other services, such as a sensing service. In this case, a sensing network function, such as Sensing Function (SF) may be used instead of the LMF. It should be understood that the following examples are only for exemplary introduction and should not limit the solution of the disclosure.

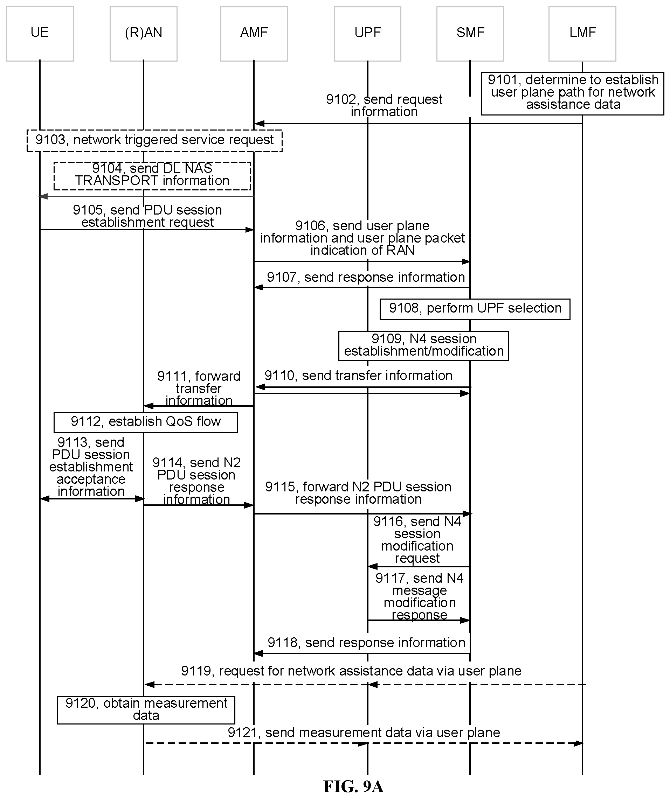

FIG. 9A is a schematic diagram illustrating an interaction of a method for establishing a path according to an embodiment of the disclosure. As illustrated in FIG. 9A, this embodiment of the disclosure relates to a method for establishing a path.

In the following embodiments, to support the LMF obtaining the service data (e.g., non-UE associated network assistance data) via the user plane based on service information, the capability of the (R)AN and core network supporting user plane connection for obtaining positioning data, the LMF may make the decision for establishing user plane connection between the (R)AN and the LMF. The related information is sent to the UE and triggers the UE to establish the user plane connection, the PDU session establishment procedure is applied with update that the user plane connection between (R)AN and the LMF is supported.

The above method includes the following.

At step 9101, the LMF determines to utilize a user plane connection to transmit network assistance data.

In some embodiments, the LMF may determine to establish the user plane connection for network assistance data.

For example, in some embodiments, the LMF may determine to establish the user plane connection for network assistance data based on service information, the capability of R(AN) and core network supporting user plane connection for obtaining positioning data, to obtain the positioning data.

For example, in some embodiments, the LMF may receive positioning service request(s) from the UE, AF, or 5GC NF, and the service request may include the determined target (R)AN node.

At step 9102, the LMF sends a positioning service request to the AMF.

In some embodiments, the LMF sends the positioning service request to the AMF, the service request carries indication information, and the indication information is used for indicating that a user plane connection between the (R)AN and the LMF needs to be established, i.e., the indication information is used for indicating that a user plane for (R)AN connection needs to be established.

In some embodiments, the indication information may be indicated by including the user plane information of the LMF, or by a dedicated indication.

For example, in some embodiments, the service request may also include the DNN of the data network where the LMF to which this user plane path connects is located, and/or the S-NSSAI supported by the access network device.

At step 9103, the network triggers a service request.

In some embodiments, the AMF sends the information in the positioning service request received in step 9102 to the UE, triggering a PDU session establishment procedure.

In some embodiments, if the UE is in an idle state, the step 9103, i.e., the network triggered service request procedure, is performed to establish a control plane signaling connection with the terminal to send the information in the service request received in step 9102 to the UE.

At step 9104, the AMF sends downlink NAS transport information to the UE.

In some embodiments, if the UE is in a connected state, the step 9104 is performed, i.e., the AMF sends the information in the service request received in step 9102 to the UE via DL NAS TRANSPORT message.

In some embodiments, the step 9103 may be implemented alone, the steps 9103 and 9104 may be implemented in combination, or the step 9104 may be implemented alone.

At step 9105, the UE sends a PDU session establishment request to the AMF.

In some embodiments, if the UE determines that a PDU session connecting to the data network where the LMF is located needs to be established, the UE initiates a PDU session establishment procedure with the indication information indicating that the user plane connection between the (R)AN and the LMF needs to be established.

In some embodiments, the UE sends a PDU session establishment request, including the indication information indicating that the user plane connection between the (R)AN and the LMF is required. For example, the request also includes the DNN and/or the S-NSSAI.

In some embodiments, if the DNN and/or the S-NSSAI is not received by the UE in step 9103 or 9104, it may be deducted from the user plane information received in step 9103 or 9104, and policy configured locally or via the user route selection policy (URSP).

At step 9106, the AMF sends the user plane information and the indication information to the SMF.

In some embodiments, the AMF may send the user plane information of the LMF and the indication information to the SMF via invoking Nsmf_PDUSession_CreateSMContext Request service operation. The indication information is used for indicating that a user plane for (R)AN needs to be established.

At step 9107, the SMF sends a response message to the AMF.

In some embodiments, the SMF may send the response message to the AMF via a Nsmf_PDUSession_CreateSMContext Response service operation.

At step 9108, the SMF performs UPF selection.

In some embodiments, the SMF performs the UPF selection. For example, the SMF may select the required UPF based on the user plane connection information in the LMF information and/or the UE location information.

In some embodiments, the (R)AN node, for the user plane connection between the (R)AN and the LMF, may be the serving (R)AN node of the UE or the other (R)AN node.

In some embodiments, if the (R)AN node for the user plane connection between the (R)AN and the LMF is not the serving (R)AN node of the UE, the (R)AN node may be indicated by the LMF or determined by any one of the SMF, AMF, or (R)AN.

In some embodiments, the SMF may perform the UPF selection based on the (R)AN node information. In this case, one or more N3 UPFs may be selected, i.e., the N3 UPF for the user plane connection between the (R)AN and the LMF may not be the same as the N3 UPF for the UE to connect via its serving (R)AN.

At step 9109, N4 session Establishment or modification is performed.

In some embodiments, the SMF performs N4 session establishment or modification with the UPF selected in step 9108.

At step 9110, the SMF sends transport information to the AMF.

In some embodiments, the SMF transfers the N1 information and N2 information to the AMF for the (R)AN, where the N1 information includes PDU session establishment acceptance information, and the N2 information includes a QoS flow request for the user plane connection between the (R)AN and the LMF and the user plane information of the LMF.

In some embodiments, the N2 information also includes the CN tunnel information of the selected N3 UPF, the QoS flow to be requested with related QoS profile for the user plane data packet between the (R)AN and the LMF. For example, the QoS flow to be requested for the user plane between the (R)AN and the LMF may include the user plane information of the LMF.

At step 9111, the AMF forwards the transport information to the (R)AN.

In some embodiments, the AMF forwards the N1 information and N2 information received in step 9110 to the (R)AN.

At step 9112, the (R)AN establishes a QoS flow.

In some embodiments, in addition to the PDU session establishment behavior for connecting the terminal, the QoS flow for connecting the user plane between the (R)AN and the LMF is also established.

At step 9113, PDU session establishment acceptance information is sent.

In some embodiments, the PDU session establishment accept is sent to the UE, and the radio resource is not allocated for the QoS flow for the user plane between the (R)AN and the LMF.

At step 9114, the (R)AN sends an N2 PDU session response message to the AMF.

In some embodiments, in addition to the PDU session establishment behavior for connecting the terminal, N2 information is sent from the (R)AN to the AMF, where the N2 information additionally includes the AN tunnel information for the QoS flow for the user plane between the (R)AN and the LMF. If the AN tunnel information for other UE related QoS flow is different from the AN tunnel information for the QoS flow for the user plane between the (R)AN and the LMF, the AN tunnel information for other UE related QoS flow may also be sent to the AMF.

For example, in some embodiments, the (R)AN may include its ability to generate the positioning data packet as required in step 9111. That is, when generating a user plane data packet based on the user plane information of the LMF, the destination address of the data packet may be set according to the encapsulation of the user plane information of the LMF.

At step 9115, the AMF forwards the N2 PDU session response message to the SMF.

In some embodiments, the AMF sends the N2 information received from the (R)AN to the SMF via invoking Nsmf_PDUSession_UpdateSMContext Request service operation.

At step 9116, the SMF sends an N4 session modification request to the UPF.

In some embodiments, the SMF sends an N4 session modification request to the UPF to cause the UPF to perform an N4 session modification procedure.

In some embodiments, the SMF provides the UPF with AN tunnel information and corresponding forwarding rules.

At step 9117, the UPF sends an N4 session modification response to the SMF.

In some embodiments, the UPF sends an N4 session modification response to the SMF in response to the N4 session modification request sent by the SMF to the UPF.

At step 9118, the SMF sends a response message to the AMF.

In some embodiments, the SMF responds to the information sent by the AMF in step 9115 by invoking Nsmf_PDUSession_UpdateSMContext Response service operation.

At step 9119, the network assistance data is requested for via the user plane.

In some embodiments, after the user plane connection between the (R)AN and the LMF is established, network assistance data (e.g., network positioning message) may be sent via the established user plane connection.

Or network assistance data may be sent from the LMF to the (R)AN via the AMF, the user plane information of the LMF may also be sent, and the PDU session ID for establishing the user plane path between the (R)AN and the LMF may be sent. The Acknowledge message is sent by the UE to the LMF via the AMF, and the PDU session ID for the user plane path between the (R)AN and the LMF to the LMF is sent to the LMF.

At step 9120, the (R)AN obtains measurement data.

In some embodiments, the (R)AN obtains measurement data, such as obtaining the requested measurement data for the positioning service.

At step 9121, measurement data is sent via the user plane.

In some embodiments, the measurement data is sent via the established user plane connection.

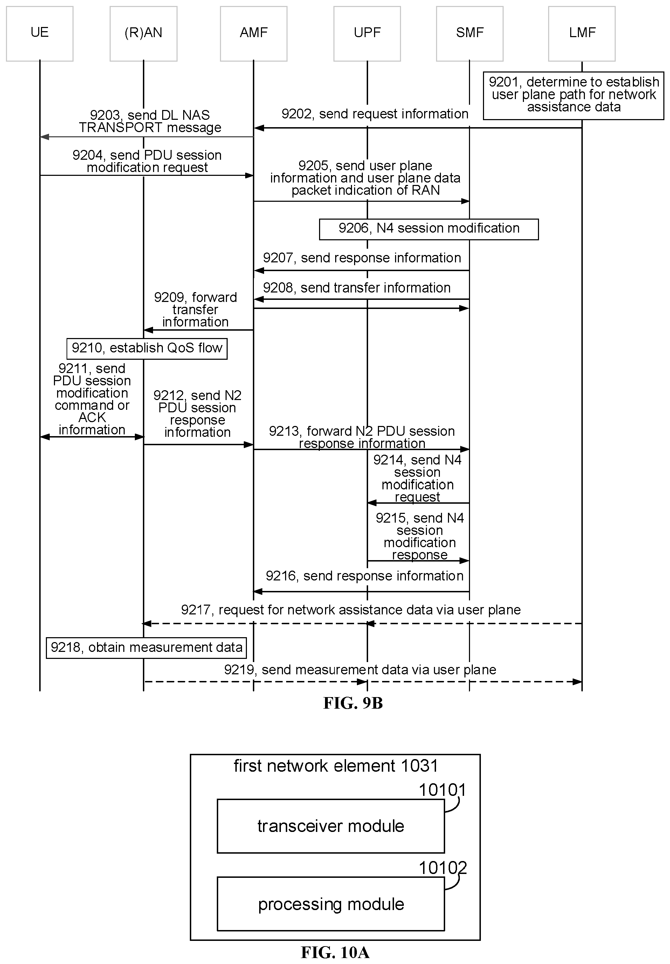

FIG. 9B is a schematic diagram illustrating an interaction of a method for establishing a path according to an embodiment of the disclosure. As illustrated in FIG. 9B, this embodiment of the disclosure relates to a method for establishing a path. The method includes the following.

In the following embodiments, in an existing PDU session corresponding to a user plane connection between the UE and the LMF, a user plane connection between the (R)AN and the LMF is added through a modification procedure.

Different from the embodiment illustrated in FIG. 9A, in the embodiment illustrated in FIG. 9B, there is an existing PDU session (this session already contains the user plane connection between the UE and the LMF), so it only needs to add the user plane connection for the (R)AN during the PDU session modification process to connect the (R)AN and the LMF. After the AMF receives the related information in step 9202, the AMF may trigger the SMF modified PDU session procedure or the AMF may trigger the UE modified PDU session procedure. In the case where the UE triggers the PDU session modification, the information in step 9202 is sent by the AMF to the UE. In the case where the SMF triggers the PDU session modification, the information in step 9202 is sent by the AMF to the SMF.

The above method includes the following.

At step 9201, the LMF determines to utilize a user plane connection to transmit network assistance data.

This step is similar to step 9101 in FIG. 9a, and reference may be made to the above description, which is not repeated here.

At step 9202, the LMF sends a positioning service request to the AMF.

This step is similar to step 9102 in FIG. 9a, and reference may be made to the above description, which is not repeated here.

At step 9203, the AMF sends downlink NAS transport information to the UE.

In some embodiments, this step is the same as step 9104 in FIG. 9a. Or the AMF may make a decision to reuse an existing PDU session, or the AMF may send the related information to the SMF based on the request in step 9202 (actively or based on the SMF's subscription) and let the SMF decide to reuse an existing PDU session, and then steps 9203 and 9204 are skipped.

At step 9204, the UE sends a PDU session modification request to the AMF.

In some embodiments, the UE triggers a PDU session modification to add the user plane connection between the (R)AN and the LMF in the existing PDU session. After the UE receives the information in step 9203, the UE determines there is the existing PDU session connecting to the data network where the LMF is deployed, where the PDU session connects the UE and the data network where the LMF is located, and the data network is identified by DNN and/or the S-NSSAI, but the user plane connection between the (R)AN and the LMF is not available or there is no user plane connection between the (R)AN and the LMF. The UE sends a PDU session modification request to the AMF, and the PDU session modification request includes an indication indicating establishing a user plane for the (R)AN.

At step 9205, the AMF sends the user plane information and indication information to the SMF.

In some embodiments, the AMF sends the user plane information of the LMF and the indication information to the SMF by invoking Nsmf_PDUSession_UpdateSMContext Request, and the indication information indicating to establish a user plane for the (R)AN.

At step 9206, N4 session modification is performed.

In some embodiments, the SMF performs an N4 session modification to add the user path between the (R)AN and the LMF.

For example, in some embodiments, when the serving (R)AN node is different from the (R)AN node for the user plane for the (R)AN, a UPF may be selected for the user plane for the (R)AN as described in step 9108 of FIG. 9A.

At step 9207, the SMF sends a response message to the AMF.

In some embodiments, the SMF responds to the information sent by the AMF to the SMF by invoking Nsmf_PDUSession_UpdateSMContext Response.

At step 9208, the SMF sends transport information to the AMF.

In some embodiments, the SMF transfers the N2 information to the AMF for the (R)AN with the QoS flow to be requested with related QoS profile for the user plane connection between the (R)AN and the LMF, and the user plane information of the LMF is included for the requested QoS flow for the user plane between the (R)AN and the LMF.

For example, in some embodiments, the SMF may also transfer the N1 information to the AMF for the (R)AN with a PDU session modification command or PDU session modification ACK information. A session modification initiated by the SMF includes the PDU session modification command, and a session modification initiated by the UE includes the PDU session modification ACK information.

At step 9209, the AMF forwards the transport information to the (R)AN.

In some embodiments, the AMF forwards the N1 information and N2 information received in step 9208 to the (R)AN.

At step 9210, the (R)AN establishes a QoS flow.

In some embodiments, in addition to the normal PDU session establishment behavior, a QoS flow for the user plane for the (R)AN is also established.

At step 9211, the PDU session modification command or ACK information is sent.

In some embodiments, the PDU session modification command or ACK information is sent to the UE, and the radio resource is not allocated for the QoS flow for the user plane for the (R)AN.

At step 9212, the (R)AN sends N2 PDU session response information to the AMF.

In some embodiments, in addition to the PDU session modification behavior for connecting the terminal, N2 information is sent from the (R)AN to the AMF with the AN tunnel information for the QoS flow for the user plane between the (R)AN and the LMF. If the AN tunnel information for other UE related QoS flow is different from the AN tunnel information for the QoS flow for the user plane between the (R)AN and the LMF, the AN tunnel information for other UE related QoS flow may also be sent to the AMF.

For example, in some embodiments, the (R)AN includes its ability to generate the positioning data packet as required. That is, when generating a user plane data packet according to the user plane information of the LMF, the destination address of the data packet may be set according to the encapsulation of the user plane information of the LMF.

At step 9213, the AMF forwards the N2 PDU session response information to the SMF.

In some embodiments, the AMF sends the N2 information received from the (R)AN to the SMF via invoking the Nsmf_PDUSession_UpdateSMContext Request service operation.

At step 9214, the SMF sends an N4 session modification request to the UPF.

In some embodiments, the SMF sends an N4 session modification request to the UPF to cause the UPF to perform an N4 session modification procedure.

In some embodiments, the SMF provides the UPF with AN tunnel information and corresponding forwarding rules.

At step 9215, the UPF sends an N4 session modification response to the SMF.

In some embodiments, the UPF sends an N4 session modification response to the SMF in response to the N4 session modification request sent by the SMF to the UPF.

At step 9216, the SMF sends response information to the AMF.

In some embodiments, the SMF responds to the information sent by the AMF in step 9115 via invoking Nsmf_PDUSession_UpdateSMContext Response service operation.

At step 9217, network assistance data is required via the user plane.

In some embodiments, after establishing the user plane between the (R)AN and the LMF by modifying the PDU session connecting the terminal, the network assistance data (e.g., network positioning information) may be sent via the established user plane connection.

Or the network assistance data may be sent from the LMF to the (R)AN via the AMF, the user plane information of the LMF may be sent, and the PDU session ID for the user plane between the (R)AN and the LMF established between the (R)AN and the LMF may also be sent. The Acknowledge message may be sent by the UE to the LMF via the AMF, and the PDU session ID for the user plane between the (R)AN and the LMF may also be sent to the LMF.

At step 9218, the (R)AN obtains measurement data.

This step is similar to step 9120 in FIG. 9a, and reference may be made to the above description, which is not repeated here.

At step 9219, the measurement data is sent via the user plane.

This step is similar to step 9121 in FIG. 9a, and reference may be made to the above description, which is not repeated here.

Embodiments of the disclosure also provide apparatuses for implementing any of the above methods. For example, an apparatus is provided. The apparatus includes units or modules for implementing the steps performed by the terminal in any of above methods. As another example, another apparatus is provided. The apparatus includes units or modules for implementing the steps performed by a network device (e.g., access network device, core network function node, core network device, etc.) in any of above methods.

It should be understood that the division of units or modules in an apparatus is only a division of logical functions. In actual implementation, they may be fully or partially integrated into one physical entity or physically separated. In addition, the units or modules in the apparatus may be implemented in the form of a processor invoking software. For example, the apparatus includes a processor and a memory. The processor is connected to the memory. The memory has instructions stored therein. The processor invokes the instructions stored in the memory to implement any of above methods or implement the functions of the units or modules of the above apparatuses. The processor is, for example, a general-purpose processor, such as a central processing unit (CPU) or a microprocessor. The memory is a memory within the apparatus or a memory external to the apparatus. Or the units or modules in the apparatus may be implemented in the form of hardware circuits, and the functions of some or all of the units or modules may be implemented through the design of hardware circuits. The above hardware circuits may be understood as one or more processors. For example, in one implementation, the above hardware circuit is an application-specific integrated circuit (ASIC), and the functions of some or all of the above units or modules are implemented through the design of logical relationships of components in the circuit. As another example, in another implementation, the above hardware circuit may be implemented by a programmable logic device (PLD), taking a field programmable gate array (FPGA) as an example, which may include a large number of logic gates, and the connection relationships between the logic gates are configured through a configuration file, thereby implementing the functions of some or all of above units or modules. All units or modules of above apparatuses may be implemented entirely in the form of a processor invoking software, or entirely in the form of hardware circuits, or partially in the form of a processor invoking software and the remaining part in the form of hardware circuits.

In embodiments of the disclosure, a processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP), etc. In another implementation, the processor may implement certain functions through the logical relationships of a hardware circuit. The logical relationships of the above hardware circuit are fixed or reconfigurable. For example, the processor is a hardware circuit implemented by an application-specific integrated circuit (ASIC) or a programmable logic device (PLD), such as an FPGA. In a reconfigurable hardware circuit, a process of the processor loading a configuration document to implement the hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 10A is a schematic diagram illustrating a structure of a first network element 1031 according to an embodiment of the disclosure. As illustrated in FIG. 10A, the first network element 1031 may include at least one of a transceiver module 10101 or a processing module 10102. In some embodiments, the above transceiver module 10101 is configured to receive first information sent by a second network element, to establish a user plane path between an access network device and a third network element by establishing or modifying a protocol data unit (PDU) session between a terminal and a data network where the third network element is located. The first information is used for establishing the user plane path, and the user plane path is used for sending and/or receiving first data related to a first service. For example, the above transceiver module 10101 is configured to perform at least one of communication (i.e., sending and/or receiving) steps (e.g., step 2106, step 2109, step 2113, step 2114, step 2206, step 2209, step 2213, step 2214, but not limited thereto) performed by the first network element 1031 in any of above methods, which is not repeated here. For example, the above processing module 10102 is configured to perform at least one of other steps (e.g., step 2107, step 2108, step 2207, step 2208, but not limited thereto) performed by the first network element 1031 in any of above methods, which is repeated here.

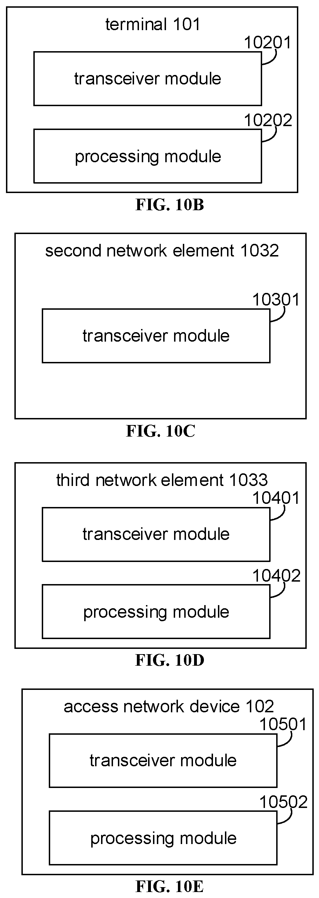

FIG. 10B is a schematic diagram illustrating a structure a terminal 101 according to an embodiment of the disclosure. As illustrated in FIG. 10B, the terminal 101 may include at least one of a transceiver module 10201 or a processing module 10202. In some embodiments, the above transceiver module 10201 is configured to obtain fifth information. The fifth information is used for establishing a user plane path between an access network device and a third network element. The user plane path is used for transferring first data related to a first service. The user plane path is established by establishing or modifying a protocol data unit (PDU) session between the terminal and a data network where the third network element is located. For example, the above transceiver module 10201 is configured to perform communication (i.e., sending and/or receiving) steps (e.g., step 2104, step 2204, but not limited thereto) in any of above methods. For example, the above processing module 10202 is configured to perform at least one of other steps (e.g., step 2103, step 2105, step 2203, step 2205, but not limited thereto) performed by the terminal 101 in any of above methods, which is not repeated here.

FIG. 10C is a schematic diagram illustrating a structure of a second network element 1032 according to an embodiment of the disclosure. As illustrated in FIG. 10C, the second network element 1032 may include a transceiver module 10301. In some embodiments, the above transceiver module 10301 is configured to receive eighth information sent by a third network element and send first information to a first network element, to establish a user plane path between an access network device and the third network element by establishing or modifying a protocol data unit (PDU) session between a terminal and a data network where the third network element is located. The eighth information and/or the first information are used for establishing the user plane path, and the user plane path is used for sending and/or receiving first data related to a first service. For example, the above transceiver module 10301 is configured to perform at least one of communication (the sending and/or receiving) steps (e.g., step 2102, step 2103, step 2105, step 2106, step 2109, step 2110, step 2112, step 2113, step 2202, step 2203, step 2205, step 2206, step 2209, step 2210, step 2212, step 2213, but not limited thereto) performed by the second network element 1032 in any of above methods, which is not repeated here.

FIG. 10D is a schematic diagram illustrating a structure of a third network element 1033 according to an embodiment of the disclosure. As illustrated in FIG. 10D, the third network element 1033 may include at least one of a transceiver module 10401 or a processing module 10402. In some embodiments, the above transceiver module 10401 is configured to send eighth information to a second network element, where the eighth information is used for establishing a user plane path, and receive, via the user plane path, first data sent by an access network device, where the first data is related to a first service. In some embodiments, the above processing module 10402 is configured to determine to establish a user plane path between the third network element and an access network device. For example, the above transceiver module 10401 is configured to perform at least one of communication (sending and/or receiving) steps (e.g., step 2102, step 2115, step 2117, step 2202, step 2215, step 2217, but not limited thereto) performed by the third network element 1033 in any of above methods, which is not repeated here. For example, the above processing module 10402 is configured to perform at least one of e other steps (e.g., step 2101, step 2201, but not limited thereto) executed by the third network element 1033 in any of above methods, which is not repeated here.

FIG. 10E is a schematic diagram illustrating a structure of an access network device 102 according to an embodiment of the disclosure. As illustrated in FIG. 10E, the access network device 102 may include at least one of a transceiver module 10501 or a processing module 10502. In some embodiments, the above transceiver module 10501 is configured to send, via a user plane path between the access network device and a third network element, first data to the third network element. The first data is related to a first service, and the user plane path is established by establishing or modifying a protocol data unit (PDU) session between a terminal and a data network where the third network element is located. For example, the above transceiver module 10501 is configured to perform at least one of communication (sending and/or receiving) steps (e.g., step 2110, step 2112, step 2115, step 2117, step 2210, step 2212, step 2215, step 2217, but not limited thereto) performed by the access network device 102 in any of above methods, which is not repeated here. For example, the above processing module 10502 is configured to perform at least one of other steps (e.g., step 2111, step 2116, step 2211, step 2216, but not limited thereto) performed by the access network device 102 in any of above methods, which is not repeated here.

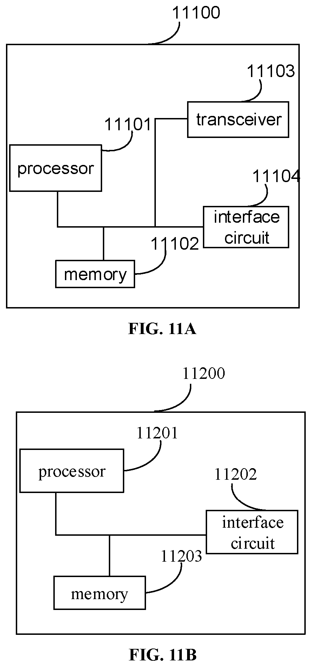

FIG. 11A is a schematic diagram illustrating a structure of a communication device 11100 according to an embodiment of the disclosure. The communication device 11100 may be a network device (e.g., access network device, core network device, etc.), or a terminal (e.g., user equipment, etc.), or a chip, chip system, or processor supporting the network device to implement any of above methods, or a chip, chip system, or processor supporting the terminal to implement any of above methods. The communication device 11100 may be used to implement the methods described in the above method embodiments, and details may be found in the description of the above method embodiments.

As illustrated in FIG. 11A, the communication device 11100 includes one or more processors 11101. The processor 11101 may be a general-purpose processor or a special-purpose processor, etc. For example, it may be a baseband processor or a central processing unit. The baseband processor may be used to process communication protocols and communication data, and the central processing unit may be used to control a communication device (e.g., a base station, a baseband chip, a terminal device, a terminal device chip, a DU, or a CU, etc.), execute programs, and process data. For example, the communication device 11100 is used to perform any of above methods. For example, one or more processors 11101 are used to invoke instructions to cause the communication device 11100 to perform any of above methods.

In some embodiments, the communication device 11100 also includes one or more transceivers 11103. When the communication device 11100 includes one or more transceivers 11102, the transceiver 11102 performs at least one of communication (sending and/or receiving) steps (e.g., step 2101, step 2102, step 2103, step 2105, step 2106, step 2109, step 2110, step 2112, step 2113, step 2114, step 2115, step 2117, step 2201, step 2202, step 2203, step 2205, step 2206, step 2209, step 2210, step 2212, step 2213, step 2214, step 2215, step 2217, but not limited thereto) in above methods, and the processor 11101 performs at least one of other steps (e.g., step 2101, step 2104, step 2107, step 2108, step 2111, step 2116, step 2201, step 2204, step 2207, step 2208, step 2211, step 2216, but not limited thereto). In embodiments, the transceiver may include a receiver and/or a transmitter, which may be separate or integrated. For example, terms such as "transceiver", "transceiver unit", "transceiver machine", "transceiver circuit", "interface circuit", may "interface" may be interchangeable, terms such as "transmitter", "transmitting unit", "transmitter machine", and "transmitting circuit" may be interchangeable, and terms such as "receiver", "receiving unit", "receiver machine", "receiving circuit" may be interchangeable.

In some embodiments, the communication device 11100 also includes one or more memories 11102 for storing data. For example, all or part of the memory 11102 may also be located outside the communication device 11100. In embodiments, the communication device 11100 may include one or more interface circuits 11104. For example, the interface circuit 11104 is connected to the memory 11102, and the interface circuit 11104 may be used to receive data from the memory 11102 or other devices, and may be used to send data to the memory 11102 or other devices. For example, the interface circuit 11104 may read data stored in the memory 11102 and send the data to the processor 11101.

The communication device 11100 according to the above embodiments may be a network device or a terminal, but the scope of the communication device 11100 according to the disclosure is not limited thereto, and the structure of the communication device 11100 may not be limited by FIG. 11A. The communication device may be an independent device or may be part of a larger device. For example, the communication device may be: (1) an independent integrated circuit (IC), a chip, a chip system, or a subsystem; (2) a collection of one or more ICs, for example, the above collection may also include storage components for storing data and programs; (3) an ASIC, such as a modem; (4) a module that may be embedded in other devices; (5) a receiver, a terminal, a smart terminal, a cellular phone, a wireless device, a handheld device, a mobile unit, a vehicle-mounted device, a network device, a cloud device, an artificial intelligence device, etc.; (6) others.

FIG. 11B is a schematic diagram illustrating a structure of a chip 11200 according to an embodiment of the disclosure. For cases where the communication device 11100 may be a chip or a chip system, reference may be made to the schematic diagram illustrating a structure of the chip 11200 illustrated in FIG. 11B, but it is not limited thereto.

The chip 11200 includes one or more processors 11201. The chip 11200 is used to perform any of above methods.

In some embodiments, the chip 11200 also includes one or more interface circuits 11202. For example, terms such as "interface circuit", "interface", and "transceiver pin" may be interchangeable. In some embodiments, the chip 11200 also includes one or more memories 11203 for storing data. For example, all or part of the memory 11203 may be located outside the chip 11200. For example, the interface circuit 11202 is connected to the memory 11203, and the interface circuit 11202 may be used to receive data from the memory 11203 or other devices, and the interface circuit 11202 may be used to send data to the memory 11203 or other devices. For example, the interface circuit 11202 may read data stored in the memory 11203 and send the data to the processor 11201.

In some embodiments, the interface circuit 11202 performs at least one of communication (sending and/or receiving) steps (e.g., step 2101, step 2102, step 2103, step 2105, step 2106, step 2109, step 2110, step 2112, step 2113, step 2114, step 2115, step 2117, step 2201, step 2202, step 2203, step 2205, step 2206, step 2209, step 2210, step 2212, step 2213, step 2214, step 2215, step 2217, but not limited thereto) in above methods. The interface circuit 11202 performing communication (sending and/or receiving) steps in above methods means that, for example, the interface circuit 11202 performs data interaction between the processor 11201, the chip 11200, the memory 11203, or a transceiver device. In some embodiments, the processor 11201 performs at least one of other steps (e.g., step 2101, step 2104, step 2107, step 2108, step 2111, step 2116, step 2201, step 2204, step 2207, step 2208, step 2211, step 2216, but not limited thereto) in above methods.

The modules and/or devices according to various embodiments of virtual devices, physical devices, or chips may be arbitrarily combined or separated as appropriate. For example, some or all of steps may also be performed by multiple modules and/or devices in cooperation, which is not limited herein.

The disclosure also provides a storage medium having instructions stored thereon. When the instructions are executed on the communication device 11100, the communication device 11100 is caused to perform any of above methods. For example, the above storage medium is an electronic storage medium. For example, the above storage medium is, but is not limited to, a computer-readable storage medium. The above storage medium may also be a storage medium readable by other devices. For example, the above storage medium may be a non-transitory storage medium. But the disclosure is not limited thereto. The above storage medium may also be a transitory storage medium.

The disclosure also provides a program product. When the program product is executed by the communication device 11100, the communication device 11100 is caused to perform any of above methods. For example, the above program product is a computer program product.

The disclosure also provides a computer program. When the computer program is executed on a computer, the computer is caused to perform any of above methods.

The above embodiments may be implemented in whole or in part by software, hardware, firmware, or any combination thereof. When implemented using software, above embodiments may be implemented in whole or in part in the form of a computer program product. The computer program product includes one or more computer programs. When the computer program is loaded and executed on a computer, the processes or functions according to the embodiments of the disclosure are generated in whole or in part. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website site, computer, server, or data center to another website site, computer, server, or data center by wire (e.g., coaxial cable, optical fiber, digital subscriber line (DSL)) or wirelessly (e.g., infrared, wireless, microwave, etc.). The computer-readable storage medium may be any available medium that a computer can access, or a data storage device such as a server or data center integrated with one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

A person of ordinary skill in the art may appreciate that the units and algorithm steps described in connection with embodiments of the disclosure may be implemented by electronic hardware, or a combination of computer software and electronic hardware. Whether these functions are performed by hardware or software depends on the specific application and design constraints of the technical solution. A skilled person in the art may use different methods for each specific application to implement the described functions, but such implementation should not be considered beyond the scope of the p disclosure.

A person skilled in the art may clearly understand that for the convenience and conciseness of description, for the specific working processes of the systems, devices, and units described above, reference may be made to the corresponding processes in the foregoing method embodiments, which are not repeated here.

The above are only specific implementations of the disclosure, but the scope of protection of the disclosure is not limited thereto. Any person skilled in the art may easily think of changes or substitutions within the technical scope of disclosure, which should be covered within the protection scope of the disclosure. Therefore, the protection scope of the disclosure should be subject to the projection scope of the claims.

## Claims

1. A method for establishing a path, performed by a first network element, the method comprising:
receiving first information sent by a second network element, to establish a user plane path between an access network device and a third network element by establishing or modifying a protocol data unit (PDU) session between a terminal and a data network where the third network element is located, wherein the first information is used for establishing the user plane path, and the user plane path is used for sending and/or receiving first data related to a first service.

2. The method of claim 1, wherein the first information comprises at least one of:
indication information, wherein the indication information is used for indicating establishing the user plane path;
user plane information of the third network element;
location information of the terminal;
a data network name (DNN) of the data network where the third network element is located;
single network slice selection assistance information (S-NSSAI) of the data network where the third network element is located; or
information of the access network device that the user plane path needs to connect to.

3. The method of claim 2, wherein the access network device provides no service to the terminal.

4. The method of claim 2 or 3, wherein an establishment mode of establishing the user plane path by establishing or modifying the PDU session between the terminal and the data network where the third network element is located is determined by any one of the first network element, the second network element, or the third network element,
in a case where the establishment mode is determined by the second network element or the third network element, the indication information is further used for indicating establishing the user plane path by establishing or modifying the PDU session between the terminal and the data network where the third network element is located.

5. The method of any one of claims 1 to 4, wherein the first information is carried by a first message, the first message being used for requesting establishment or modification of a PDU session context.

6. The method of any one of claims 1 to 5, further comprising:
determining one or more fourth network elements based on the first information; and
establishing or modifying one or more N4 sessions with the one or more fourth network elements.

7. The method of any one of claims 1 to 6, further comprising:
sending second information to the access network device via the second network element; and
receiving third information sent by the access network device via the second network element.

8. The method of claim 7, wherein the second information comprises at least one of:
core network tunnel information of the one or more fourth network elements selected by the first network element;
a requested quality of service (QoS) flow;
a requested QoS flow related QoS parameter; or
user plane information of the third network element.

9. The method of claim 7 or 8, wherein the third information comprises at least one of:
capability information of the access network device;
access network tunnel information of the access network device;
access network tunnel information for a terminal related quality of service (QoS) flow; or
access network tunnel information for a terminal unrelated QoS flow.

10. The method of claim 8 or 9, further comprising:
sending fourth information to the one or more fourth network elements, wherein the fourth information comprises at least one of:
access network tunnel information; or
a forwarding rule used for indicating a rule for a fourth network element to forward the first data.

11. The method of claim 10, wherein the forwarding rule comprises at least one of:
a first rule indicating forwarding the first data associated with a QoS flow identifier (QFI); or
a second rule indicating forwarding the first data based on a destination address of the first data.

12. The method of claim 10, wherein the forwarding rule is a first rule, the first rule indicating forwarding the first data associated with a QoS flow identifier (QFI); and wherein the access network device is not aware of the user plane information of the third network element and/or the first data determined by the access network device comprises no destination address of the first data encapsulated using the user plane information of the third network element.

13. The method of claim 10, wherein the forwarding rule is a second rule, the second rule indicating forwarding the first data based on a destination address of the first data; and wherein the access network device is aware of the user plane information of the third network element, and the first data determined by the access network device comprises the destination address of the first data encapsulated using the user plane information of the third network element.

14. A method for establishing a path, performed by a terminal, the method comprising:
obtaining fifth information, wherein the fifth information is used for establishing a user plane path between an access network device and a third network element, the user plane path is used for transferring first data related to a first service, and the user plane path is established by establishing or modifying a protocol data unit (PDU) session between the terminal and a data network where the third network element is located.

15. The method of claim 14, wherein the fifth information comprises at least one of:
indication information, wherein the indication information is used for indicating establishing the user plane path;
user plane information of the third network element;
a data network name (DNN) of the data network where the third network element is located; or
single network slice selection assistance information (S-NSSAI) of the data network where the third network element is located.

16. The method of claim 15, further comprising:
determining an absence of the PDU session and establishing the PDU session based on the fifth information, wherein the data network where the third network element is located and to which the PDU session connects is identified by the DNN and/or the S-NSSAI.

17. The method of claim 15, further comprising:
determining a presence of the PDU session and/or that the user plane path between the access network device and the third network element in the PDU session is unavailable, and modifying the PDU session based on the fifth information to add to the PDU session the user plane path between the access network device and the third network element, wherein the data network where the third network element is located and to which the PDU session connects is identified by the DNN and/or the S-NSSAI.

18. The method of any one of claims 15 to 17, wherein the DNN and/or the S-NSSAI are obtained from a second network element, obtained from the third network element, or obtained locally from the terminal.

19. The method of any one of claims 14 to 17, further comprising:
sending sixth information to a second network element, wherein the sixth information is used for establishing or modifying the PDU session.

20. The method of claim 19, wherein the sixth information comprises at least one of:
indication information, wherein the indication information is used for indicating establishing the user plane path;
user plane information of the third network element;
a data network name (DNN) of the data network where the third network element is located;
single network slice selection assistance information (S-NSSAI) of the data network where the third network element is located;
location information of the terminal; or
information of the access network device that the user plane path needs to connect to.

21. A method for establishing a path, performed by a second network element, the method comprising:
receiving eighth information sent by a third network element and sending first information to a first network element, to establish a user plane path between an access network device and the third network element by establishing or modifying a protocol data unit (PDU) session between a terminal and a data network where the third network element is located, wherein the eighth information and/or the first information are used for establishing the user plane path, and the user plane path is used for sending and/or receiving first data related to a first service.

22. The method of claim 21, wherein the eighth information comprises at least one of:
indication information, wherein the indication information is used for indicating establishing the user plane path;
user plane information of the third network element;
information of the access network device;
a data network name (DNN) of the data network where the third network element is located; or
single network slice selection assistance information (S-NSSAI) of the data network where the third network element is located.

23. The method of claim 21 or 22, wherein the first information comprises at least one of:
indication information, wherein the indication information is used for indicating establishing the user plane path;
user plane information of the third network element;
location information of the terminal;
a data network name (DNN) of the data network where the third network element is located;
single network slice selection assistance information (S-NSSAI) of the data network where the third network element is located; or
information of the access network device that the user plane path needs to connect to.

24. The method of claim 23, wherein the access network device provides no service to the terminal.

25. The method of any one of claims 21 to 24, wherein an establishment mode of establishing the user plane path by establishing or modifying the PDU session between the terminal and the data network where the third network element is located is determined by any one of the first network element, the second network element, or the third network element,
in a case where the establishment mode is determined by the second network element or the third network element, the indication information is further used for indicating establishing the user plane path by establishing or modifying the PDU session between the terminal and the data network where the third network element is located.

26. The method of any one of claims 21 to 25, wherein the first information is carried by a first message, the first message being used for requesting establishment or modification of a PDU session context.

27. The method of any one of claims 21 to 26, further comprising:
sending fifth information to a terminal, wherein the fifth information comprises at least one of:
indication information, wherein the indication information is used for indicating establishing the user plane path;
user plane information of the third network element;
a data network name (DNN) of the data network where the third network element is located; or
single network slice selection assistance information (S-NSSAI) of the data network where the third network element is located.

28. The method of claim 27, wherein
in a third case, the fifth information is used for establishing the PDU session, and the third case is that the terminal determines an absence of the PDU session; or
in a fourth case, the fifth information is used for modifying the PDU session to add to the PDU session the user plane path between the access network device and the data network where the third network element is located, and the fourth case is that the terminal determines a presence of the PDU session and/or that the user plane path between the access network device and the third network element in the PDU session is unavailable,
wherein the data network where the third network element is located and to which the PDU session connects is identified by the DNN and/or the S-NSSAI.

29. The method of any one of claims 21 to 28, further comprising:
receiving second information sent by a first network element, wherein the second information comprises at least one of:
core network tunnel information of one or more fourth network elements selected by the first network element;
a requested quality of service (QoS) flow;
a requested QoS flow related QoS parameter; or
user plane information of the third network element.

30. The method of any one of claims 21 to 29, further comprising:
sending ninth information to the access network device, wherein the ninth information comprises at least one of:
core network tunnel information of one or more fourth network elements selected by the first network element;
a requested quality of service (QoS) flow;
a requested QoS flow related QoS parameter; or
user plane information of the third network element.

31. The method of any one of claims 21 to 30, further comprising:
receiving tenth information sent by the access network device, wherein the tenth information comprises at least one of:
capability information of the access network device;
access network tunnel information of the access network device;
access network tunnel information for a terminal related QoS flow; or
access network tunnel information for a terminal unrelated QoS flow.

32. The method of any one of claims 21 to 31, further comprising:
sending third information to the first network element, wherein the third information comprises at least one of:
capability information of the access network device;
access network tunnel information of the access network device;
access network tunnel information for a terminal related QoS flow; or
access network tunnel information for a terminal unrelated QoS flow.

33. A method for establishing a path, performed by a third network element, the method comprising:
determining to establish a user plane path between the third network element and an access network device;
sending eighth information to a second network element, wherein the eighth information is used for establishing the user plane path; and
receiving, via the user plane path, first data sent by the access network device, wherein the first data is related to a first service.

34. The method of claim 33, wherein the eighth information comprises at least one of:
indication information, wherein the indication information is used for indicating establishing the user plane path;
user plane information of the third network element;
information of the access network device;
a data network name (DNN) of a data network where the third network element is located; or
single network slice selection assistance information (S-NSSAI) of a data network where the third network element is located.

35. The method of claim 33 or 34, further comprising:
sending eleventh information to the access network device via the user plane path or via a control plane path between the access network device and the third network element, wherein the eleventh information is used for requesting the first data.

36. The method of claim 35, wherein the eleventh information comprises at least one of:
first data request information;
indication information, wherein the indication information is used for indicating establishing the user plane path;
user plane information of the third network element; or
identifier information of the user plane path.

37. A method for establishing a path, performed by an access network device, the method comprising:
sending, via a user plane path between the access network device and a third network element, first data to the third network element, wherein the first data is related to a first service, and the user plane path is established by establishing or modifying a protocol data unit (PDU) session between a terminal and a data network where the third network element is located.

38. The method of claim 37, further comprising:
receiving ninth information sent by a second network element, wherein the ninth information comprises at least one of:
core network tunnel information of one or more fourth network elements selected by a first network element;
a requested quality of service (QoS) flow;
a requested QoS flow related QoS parameter; or
user plane information of the third network element.

39. The method of claim 38, further comprising:
establishing a QoS flow for the user plane path.

40. The method of claim 38 or 39, further comprising:
sending tenth information to the second network element, wherein the tenth information comprises at least one of:
capability information of the access network device;
access network tunnel information of the access network device;
access network tunnel information for a terminal related QoS flow; or
access network tunnel information for a terminal unrelated QoS flow.

41. The method of any one of claims 37 to 40, further comprising:
receiving eleventh information sent by the third network element via the user plane path or via a control plane path between the access network device and the third network element, wherein the eleventh information is used for requesting the first data.

42. The method of claim 41, wherein the eleventh information comprises at least one of:
first data request information;
indication information, wherein the indication information is used for indicating establishing the user plane path;
user plane information of the third network element; or
identifier information of the user plane path.

43. The method of any one of claims 38 to 42, further comprising:
determining service data of the first service, and packaging the service data of the first service into a service data packet, as the first data, based on capability information of the access network device; wherein the service data packet comprises a destination address of the service data packet encapsulated using the user plane information of the third network element, or the service data packet comprises no destination address of the service data packet encapsulated using the user plane information of the third network element.

44. A method for establishing a path, performed in a communication system, the communication system comprising a first network element, a second network element, a third network element, an access network device, and a terminal, and the method comprising at least one of:
determining, by the third network element, to establish a user plane path between the third network element and the access network device, wherein the user plane path is used for transferring first data related to a first service, and the user plane path is established through a protocol data unit (PDU) session between the terminal and a data network where the third network element is located;
sending, by the third network element, eighth information to the second network element, wherein the eighth information is used for establishing a user plane path;
obtaining, by the terminal, fifth information, wherein the fifth information is used for establishing a user plane path;
sending, by the second network element, first information to the first network element, wherein the first information is used for establishing a user plane path; or
sending, by the access network device, first data to the third network element via a user plane path, wherein the first data is related to a first service.

45. A first network element, comprising:
a transceiver module, configured to receive first information sent by a second network element, to establish a user plane path between an access network device and a third network element by establishing or modifying a protocol data unit (PDU) session between a terminal and a data network where the third network element is located, wherein the first information is used for establishing the user plane path, and the user plane path is used for sending and/or receiving first data related to a first service.

46. A terminal, comprising:
a transceiver module, configured to obtain fifth information, wherein the fifth information is used for establishing a user plane path between an access network device and a third network element, the user plane path is used for transferring first data related to a first service, and the user plane path is established by establishing or modifying a protocol data unit (PDU) session between the terminal and a data network where the third network element is located.

47. A second network element, comprising:
a transceiver module, configured to receive eighth information sent by a third network element and send first information to a first network element, to establish a user plane path between an access network device and the third network element by establishing or modifying a protocol data unit (PDU) session between a terminal and a data network where the third network element is located, wherein the eighth information and/or the first information are used for establishing the user plane path, and the user plane path is used for sending and/or receiving first data related to a first service.

48. A third network element, comprising:
a processing module, configured to determine to establish a user plane path between the third network element and an access network device; and
a transceiver module, configured to:
send eighth information to a second network element, wherein the eighth information is used for establishing the user plane path; and
receive, via the user plane path, first data sent by the access network device, wherein the first data is related to a first service.

49. An access network device, comprising:
a transceiver module, configured to send, via a user plane path between the access network device and a third network element, first data to the third network element, wherein the first data is related to a first service, and the user plane path is established by establishing or modifying a protocol data unit (PDU) session between a terminal and a data network where the third network element is located.

50. A communication device, comprising:
one or more processors, configured to invoke instructions to cause the communication device to perform the method for establishing the path of any one of claims 1 to 41.

51. A communication system, comprising a third network element, a second network element, a first network element, an access network device, and a terminal, wherein the first network element is configured to implement the method of any one of claims 1 to 14, the terminal is configured to implement the method of any one of claims 15 to 20, the second network element is configured to implement the method of any one of claims 21 to 32, the third network element is configured to implement the method according to any one of claims 33 to 36, and the access network device is configured to implement the method of any one of claims 37 to 43.

52. A storage medium, having instructions stored thereon, wherein when the instructions are executed on a communication device, the communication device is caused to perform the method of any one of claims 1 to 43.
